# EUROPÄISCHE PATENTANMELDUNG

(11) **EP 4 472 068 A2**
(43) Veröffentlichungstag der Anmeldung: **04.12.2024**
(21) Anmeldenummer: 24179405.6
(22) Anmeldetag: 31.05.2024
(51) Int. Cl.: H02S 50/10, H02S 50/15

(54) **TESTVORRICHTUNG ZUM AUTOMATISIERTEN TESTEN EINES OPTOELEKTRONISCHEN MODULS**

(30) Priorität: 01.06.2023 LU 103139
(71) Anmelder: Solar Materials GmbH, 39114 Magdeburg (DE)
(72) Erfinder: Bargel, Jan, 39104 Magdeburg (DE); Schulze, Luisa, 38103 Braunschweig (DE); Franke, Fridolin, 39108 Magdeburg (DE)
(74) Vertreter: Gruner, Leopold Joachim

(57) **Zusammenfassung**

Die Erfindung betrifft eine Testvorrichtung zum automatisierten Testen eines optoelektronischen Moduls insbesondere einer Solarzelle oder eines Solarmoduls oder eines lichtemittierenden Moduls oder eines lichtemittierenden Bauelements. Auf oder an einer Aufnahmeeinheit kann ein optoelektronisches Modul angeordnet bzw. positioniert werden, welches dann in einer Messstation angeordneten Messeinheit, welche mit einer Auswerterecheneinheit datentechnisch verbunden ist, derart getestet bzw. einer Messung unterzogen wird, dass eine Kontrolle der Güte des optoelektronischen Moduls möglich ist. Die Testvorrichtung weist erfindungsgemäß auch eine Modultyperkennungseinheit auf, welche ebenfalls mit der Auswerterecheneinheit datentechnisch verbunden ist. Die Modultyperkennungseinheit erfasst eine Kennung des optoelektronischen Moduls und leitet diese an die Auswerterecheneinheit weiter. Dadurch kann mittels der Auswerterecheneinheit eine Zuordnung dieser Kennung durchgeführt werden, was einen Abgleich der Ergebnisse des Tests bzw. der Messung mit Referenzwerten aus einer Datenbank ermöglicht. Damit ist eine Einschätzung der Ergebnisse und vorzugsweise auch eine automatisierte Einteilung der optoelektronischen Module, insbesondere der Solarmodule, entsprechend den Ergebnissen der Messungen bzw. Tests möglich. Vorteilhaft können damit Prüfungen bzgl. der Güte bzw. Alterung von Solarzellen schnell und effizient durchgeführt werden. Weiterhin betrifft die Erfindung ein Verfahren zum automatisierten Testen von Solarmodulen, wodurch vorteilhaft relevante Leistungskennwerte effizient bestimmbar sind.

## Beschreibung

### Technisches Gebiet

Die Erfindung betrifft eine Testvorrichtung zum automatisierten Testen eines optoelektronischen Moduls insbesondere einer Solarzelle oder eines Solarmoduls oder eines lichtemittierenden Moduls oder eines lichtemittierenden Bauelements. Vorteilhaft können damit Prüfungen bzgl. der Güte bzw. Alterung von Solarzellen schnell und effizient durchgeführt werden. Weiterhin betrifft die Erfindung ein Verfahren zum automatisierten Testen von Solarmodulen, wodurch vorteilhaft relevante Leistungskennwerte effizient bestimmbar sind.

Optoelektronische Bauelemente sind in vielen Bereichen verbreitet und werden aufgrund ihrer hohen Effizienz und Anwenderfreundlichkeit sehr geschätzt. Gerade Solarzellen bzw. photovoltaische Bauelemente können einen großen Beitrag zu einer Nachhaltigkeit und Umweltfreundlichkeit des täglichen Lebens leisten, indem sie Sonnenstrahlung in elektrische Energie umwandeln und somit einen großen Beitrag zur Energiewende und der damit verbundenen Umstellung der Energiegewinnung auf erneuerbare Energien ermöglichen. Da eine Fertigung mittlerweile möglichst automatisiert erfolgt, können photovoltaische Solarmodule in hoher Stückzahl hergestellt werden. Die dadurch verbesserte Wirtschaftlichkeit macht diese Technologie konkurrenzfähig, sodass sie einen großen Beitrag zur Energiesicherheit leisten können.

Allerdings werden Solarzellen im Laufe der Zeit durch verschiedene Alterungsprozesse bzw. durch Degradation in ihrer Leistungsfähigkeit beeinflusst. Darüber hinaus können Schäden, bspw. nach Unwettern mit Blitz, Hagel und Sturm, an einem Solarmodul entstehen, die sich negativ auf die Leistungsfähigkeit sowie die Lebensdauer des Moduls auswirken können. Die damit einhergehenden Effizienzverluste machen ein Weiterbetreiben von Solarzellen ab einem bestimmten Punkt unwirtschaftlich.

Um Beschädigungen und/oder Effizienzverlust an optoelektronischen Modulen, insbesondere an Solarmodulen, zu bestimmen sowie eine Einordnung in Effizienzklassen zu ermöglichen, existieren Testverfahren zur elektrischen Charakterisierung und daraus ableitbaren Effizienzverlusten des Solarmoduls. Beschädigte oder stark gealterte Module können so von einwandfreien bzw. noch verwendbaren Solarmodulen unterschieden werden und ggf. einem Recycling- oder Kreislaufwirtschaftsprozess zugeführt werden.

### Stand der Technik

Es sind unterschiedliche Verfahren bekannt, welche unterschiedliche Eigenschaften des Solarmoduls prüfen. So werden Solarmodule beispielsweise mit einer vorgegebenen Lichtintensität beleuchtet und das aus der Beleuchtung resultierende Strom-Spannungsverhalten des Solarmoduls wird daraufhin gemessen. Ein Testverfahren, bei dem die Nennleistung von Solarmodulen oder Solarzellen unter Anwendung von Lichtblitzen ermittelt wird, ist der Flash-Test, welcher eine Lichteinwirkung von wenigen Millisekunden bei einer Stärke von ca. 1000 W/m² nutzt.

Ein Test für die Ermittlung der Güte eines optoelektronischen Moduls, insbesondere eines Solarmoduls ist ein elektrischer Sicherheitstest. Gemäß der Normen IEC 61646/1996 sowie IEC 61738/2004 ist für die Sicherheit von Solarmodulen, auch als Photovoltaikmodule bezeichnet, ausschlaggebend, wie gut die stromführenden Komponenten zur Außenkante hin elektrisch isoliert und damit vor Umwelteinflüssen sowie Stromleckage geschützt sind. Bei Photovoltaikanlagen liegen die zulässigen Systemspannungen bei bis zu 1,5 kV. Um die Einhaltung dieser Anforderungen zu überprüfen, findet eine elektrische Isolationsprüfung statt. Ein solches Verfahren zum Testen einer solchen elektrischen Isolation, nutzt dabei eine Kontaktierung am Modulrand. In der DE 10 2017 002 639 A1 ist ein Verfahren beschrieben, bei dem die Kontaktierung an diesem Rahmen abschnittsweise durchgeführt wird, sodass es möglich ist, eine fehlerhafte Stelle zu lokalisieren.

Ein Prüfmittel zum Prüfen der Isolationseigenschaften eines Solarmoduls ist auch in der DE 10 2009 061 089 B4 beschrieben. Dabei wird das Solarmodul durch Kontaktierelemente, die an einer Haltevorrichtung angebracht sind, elektrisch kontaktiert. Direkt an der Haltevorrichtung ist ein Prüfmittel zur automatisierten Kontaktierung und zum Durchführen eines Isolationstests an dem Solarmodul ausgebildet. Das Prüfmittel ist so ausgebildet, dass die Kontaktierung zur Durchleitung von Messströmen und/oder Prüfströmen nutzbar ist. Weiterhin kann das bekannte Prüfmittel eine mechanische Schnittstelle zur Kopplung an einen Roboter aufweisen, womit eine automatisierte Prüfung der elektrischen Eigenschaften einer Solarmodulplatte realisierbar ist. Die Haltevorrichtung kann für unterschiedliche Arten und auch für verschieden große Solarmodultypen konstruktiv ausgestaltet werden. Nachteilig ist eine solche Umsetzung aufwändig und somit kostenintensiv.

Nachteilig bei den bekannten Testverfahren ist, dass die beschriebenen Einzelsysteme jeweils eine separate Kontaktierung des Systems erfordern.

Eine Vorrichtung für eine lichtabhängige Prüfung eines Solarmoduls sowie ein Verfahren zur Prüfung des Solarmoduls in der Prüfvorrichtung ist aus der DE 10 2011 0001 718 B4 bekannt. Das Solarmodul wird in einem Beladeabschnitt aufgenommen und mittels einer Fördereinrichtung zu einer Prüfkammer, die als Dunkelkammer ausgebildet ist, und anschließend zu einem Entladeabschnitt befördert. Die Fördereinrichtung ist mit einer Adaptervorrichtung gekoppelt, die eine elektrische Kontaktierung des Solarmoduls in der Dunkelkammer mit der vorhandenen Prüfelektronik ermöglicht. Nachteilig müssen modulspezifische Referenzwerte von einem Bediener an der Anlage manuell ausgewählt werden. Ein weiterer Nachteil ist, dass mittels der in der Vorrichtung enthaltenen Prüfkammer immer nur ein Modul vermessen werden kann.

Die US 2015/0377796 A1 offenbart eine automatisierte Testvorrichtung für Halbleitersubstrate vor der Prozessierung in eine Solarzelle, wobei mittels eines modularen Aufbaus der Vorrichtung verschiedene Tests zum Ermitteln der Güte des Halbleitersubstrats durchgeführt werden können. Hierbei wird durch eine Schnittstelle zum Eingeben von Informationen durch einen Nutzer auch die Zuordnung eines Substrats zu einer Charge, insbesondere einer Säule oder einem Säulenabschnitt. Das Handling der einzelnen Substrate, die erfindungsgemäß in Form eines Wafers vorliegen, erfolgt dabei vorzugsweise in Kassetten, in denen die Wafer scheibenweise übereinandergestapelt angeordnet sind. Die Wafer werden dabei einzeln entnommen und mit einer Fördereinheit in Kontakt gebracht, die den Transport zwischen einzelnen Messmodulen oder -stationen ermöglicht. Allerdings wird keine Möglichkeit zum automatisierten Erkennen der Testobjekte selbst offenbart. Auch ist das Durchführen elektrischer Tests nicht möglich, da keine Möglichkeit zur elektrischen Kontaktierung des Substrats vorgesehen ist. Es wird darüber hinaus lediglich ein Verfahren zur Klassifikation von Halbleitersubstraten vor der Prozessierung in eine Solarzelle, bzw. photovoltaische Zelle offenbart. Eine Testvorrichtung und ein Verfahren zum Testen eines vollständigen Solarmoduls, insbesondere im Zusammenspiel mit einer automatischen Modulerkennung und einem Testen der Ansprüche an elektrische Funktionalität und Sicherheit, die an ein fertiggestelltes Solarmodul gerichtet sind, sind in dem Dokument nicht offenbart.

### Aufgabe

Der Erfindung liegt somit die Aufgabe zugrunde, die Nachteile aus dem Stand der Technik zu überwinden und ein Verfahren zur automatischen bzw. zur automatisierten Testung von Solarmodulen zur Feststellung relevanter Leistungskennwerte und Beschädigungen zur Verfügung zu stellen, welches effizienter und damit weniger aufwändig durchführbar ist. Auch soll ein automatisierter Test zur Verfügung gestellt werden, welcher weniger fehleranfällig ist und wirtschaftlicher umgesetzt werden kann.

### Lösung

Die Aufgabe wird durch die Gegenstände des Hauptanspruchs und der nebengeordneten Ansprüche gelöst. Vorteilhafte Ausgestaltungen sind in den Unteransprüchen angegeben.

Die Aufgabe wird insbesondere durch eine Testvorrichtung zum automatisierten Testen eines optoelektronischen Moduls, insbesondere einer Solarzelle oder eines Solarmoduls oder eines lichtemittierenden Bauelements oder eines lichtemittierenden Moduls, gelöst. Die Testvorrichtung weist dabei eine **Aufnahmeeinheit** zum Positionieren eines optoelektronischen Moduls und auch eine **Kontaktierungseinheit** zum Kontaktieren, vorzugsweise zum automatisierten Kontaktieren, insbesondere am Ort der Aufnahmeeinheit, des optoelektronischen Moduls, insbesondere der Solarzelle und/oder des Solarmoduls, um einen elektrischen Kontakt zwischen dem optoelektronischen Modul, insbesondere der Solarzelle und/oder dem Solarmodul, und der ersten Messeinheit herzustellen, auf.

Weiterhin weist die Testvorrichtung wenigstens eine erste Messstation auf. Die Messstation weist dabei wenigstens eine **erste Messeinheit** für eine Leistungsüberprüfung an dem optoelektronischen Modul, insbesondere einer Solarzelle und/oder einem Solarmodul und/oder einem lichtemittierenden Bauelement, auf. Die Messeinheit ist dabei vorzugsweise für einen elektrischen Test, beispielsweise den Hochspannungstest, auch als Hipot-Test bezeichnet, oder einen Isolationstest, oder für einen Flash-Test oder für einen Elektrolumineszenztest ausgebildet. Dabei ist die erste Messeinheit dazu eingerichtet, eine erste Messgröße des optoelektronischen Moduls, vorzugsweise der Solarzelle und/oder des Solarmoduls, in Abhängigkeit wenigstens eines ersten äußeren Parameters zu ermitteln. Bei einem solchen Test wird also beispielsweise der Strom in Abhängigkeit einer Spannung ermittelt.

Weiterhin weist die Testvorrichtung erfindungsgemäß eine Modultyperkennungseinheit zum Erfassen einer Kennung, insbesondere eines Modultyps und/oder einer Modulbezeichnung, und eine damit datentechnisch verbundene Auswertungsrecheneinheit auf. Insbesondere ist die Modultyperkennungseinheit eingerichtet, eine Kennung des optoelektronischen Moduls zu bestimmen. Die Auswertungsrecheneinheit ist weiterhin datentechnisch mit der Messeinheit verbunden. Messergebnisse, also eine ermittelte Messgröße, insbesondere eine ermittelte erste Messgröße, können so durch die Auswertungsrecheneinheit direkt mit der erkannten Kennung, insbesondere mit dem erkannten Modultyp und/oder der erkannten Modulbezeichnung, in Verbindung gebracht werden.

Die von der Modultyperkennungseinheit übermittelten Daten erlauben dabei eine Zuordnung des optoelektronischen Moduls, insbesondere einer Solarzelle oder eines Solarmoduls oder eines lichtemittierenden Bauelements, zu Soll-Messgrößen aus einer Datenbank. Die Auswertungsrecheneinheit ist dabei eingerichtet, ein Ergebnis eines Abgleichs einer der durch die erste Messeinheit ermittelten ersten Messgröße, also den ermittelten Ist-Messwerten, mit den zugeordneten Soll-Messgrößen, also den entsprechenden Soll-Messwerten aus der Datenbank, zu bestimmen. Die so durch die Auswertungsrecheneinheit ermittelte Abweichung von den Soll-Messwerten kann mittels der Datenausgabeeinheit ausgegeben werden.

Eine Datenausgabeeinheit ist dabei im Sinne der Erfindung eingerichtet, die Daten an einer Schnittstelle verfügbar zu machen; daran kann beispielsweise eine Anzeige oder eine Leuchte angeschlossen werden. Eine Datenausgabeeinheit kann die Daten aber auch datentechnisch zur Verfügung stellen, sodass das ermittelte Ergebnis der Leistungsüberprüfung oder die ermittelten Messgrößen durch eine externe Recheneinheit verarbeitbar sind.

Im Sinne der Erfindung kann sich eine Datenausgabeeinheit daher auch auf ein Mittel der Datenkommunikation beziehen oder ein solches miteinschließen, wobei die Datenkommunikation sowohl über eine physische Verbindung, bspw. ein Kabel oder ein Anschluss für ein Speichermedium wie ein USB-Port oder ein Slot für eine Speicherkarte, als auch drahtlos, bspw. über WLAN, Bluetooth oder NFC, erfolgen kann.

Somit kann die Auswertungsrecheneinheit einen Abgleich einer durch die erste Messeinheit ermittelten Ist-Messgröße mit Soll-Messgrößen aus einer Datenbank durchführen. Daraus ist eine Abweichung von den Soll-Messwerten ermittelbar, deren Ergebnis durch die Auswertungsrecheneinheit mittels einer Datenausgabeeinheit ausgebbar ist. Die Datenausgabeeinheit, ist dafür ebenfalls datentechnisch mit der Auswertungsrecheneinheit verbunden.

### Allgemeine Vorteile

Aus dem Wissen über den Solarmodultyp oder die Solarmodulbezeichnung kann aufgrund von in einer Datenbank gespeicherten Daten automatisiert eine Aussage über die Güte der Solarzelle bzw. des Solarmoduls getroffen werden. Durch die Ermittlung der Messgröße an der ersten Messeinheit kann die Leistungsfähigkeit des Moduls durch einen Abgleich mit bekannten Parametern bestimmt werden. Vorzugsweise werden dabei Grenzen zwischen den Leistungsklassen festgelegt und in der Datenbank hinterlegt.

Die Testvorrichtung zum automatisierten Testen eines optoelektronischen Moduls, insbesondere einer Solarzelle oder eines Solarmoduls oder eines lichtemittierenden Moduls, ermöglicht somit vorteilhaft eine schnelle Testung und Einschätzung der Güte der Solarzellen.

Weiterhin können durch den Verzicht manueller Eingabearbeit vorteilhaft Fehlerquellen reduziert werden, wodurch die Ergebnisse zuverlässiger und exakter sind.

Eine derart effiziente Teststrategie verbessert die Verwertungsmöglichkeiten von optoelektronischen Modulen, insbesondere von gebrauchten Solarmodulen, und kann so zu einer längeren Nutzung der optoelektronischen Module, insbesondere der Solarmodule oder der Solarzellen oder der lichtemittierenden Module, und somit zu einer verbesserten Ressourcenverwertung beitragen.

Das automatisierte Erkennen und Testen der optoelektronischen Module erlaubt eine effiziente Überprüfung auch durch Personen, welche keine genauen Kenntnisse über die Funktionsweise und die allgemeinen technologischen Hintergründe der unterschiedlichen optoelektronischen Module haben. Gerade aufgrund der Tatsache, dass unterschiedliche Modultypen sehr unterschiedliche Leistungseigenschaften unter unterschiedlichen, von den Testbedingungen abweichenden Bedingungen zeigen, ist eine Einschätzung und Auswertung der Ergebnisse der Tests bzw. Messungen zur Kontrolle der Güte der optoelektronischen Module aufwändig und erfordert für die Auswertung eine hohe Fachkompetenz. Die automatisierte Erkennung ermöglicht einen Abgleich mit einer Datenbank, wodurch eine schnelle und einfache Einschätzung der Güte bzw. Leistungsfähigkeit möglich ist.

Zudem kann ein Vergleich der Messwerte mit Daten in einer Datenbank bereits während der Messung erfolgen. Dadurch kann bei einem bestimmten Ergebnis direkt abgebrochen werden, wodurch die Effizienz und der Durchsatz vorteilhaft erhöht und somit verbessert wird.

### Definitionen und vorteilhafte Ausgestaltungen

### Optoelektronisches Modul

Im Sinne der Erfindung ist ein optoelektronisches Modul ein flächiges Bauelement, das zumindest eine optoelektronisch aktive Schicht umfasst, die dazu eingerichtet ist, elektromagnetische Strahlung, vorzugsweise im sichtbaren Bereich, zu absorbieren oder zu emittieren. Dabei ist die optoelektronisch aktive Schicht auf einem Träger angeordnet und über Kontaktierungsschichten bzw. Kontaktierungselemente kann eine Außenkontaktierung realisiert werden.

Ein optoelektronisches Modul ist beispielsweise ein Solarmodul, wobei wenigstens eine optoelektronisch aktive Schicht eingerichtet ist, elektromagnetische Strahlung zu absorbieren und in elektrische Energie umzuwandeln. Ein Solarmodul weist dabei eine Solarzelle oder mehrere Solarzellen auf, welche elektrisch miteinander verbunden sind, also welche parallel und/oder in Reihe geschaltet sind. Die Solarzellen können zwischen zwei Glasplatten oder einer Glasplatte auf der sonnenzugewandten Seite und einer Rückseitenfolie oder einer Rückseitenplatte angeordnet sein. Relevant ist weiterhin eine hermetische Verkapselung, wobei eine Einzelzellenverkapselung oder eine Modulverkapselung möglich sind. Vorzugsweise kann das Solarmodul eine Anschlussdose mit Freilaufdiode, Anschlussterminal sowie häufig auch Anschlusskabel und Stecker enthalten. Die Testvorrichtung ist dabei vorzugsweise als Solarmodultestvorrichtung ausgebildet.

Eine Solarzelle ist im Sinne der Erfindung ein optoelektronisches Bauelement aufweisend ein organisches oder anorganisches Halbleitermaterial, seltener auch basierend auf Farbstoffzellen, welches photoelektrische Eigenschaften aufweist. Wenn Sonnenlicht auf die Solarzelle trifft, wird ein Teil der Photonen durch das Halbleitermaterial absorbiert, wodurch Elektronen freigesetzt werden und eine Ladungstrennung zwischen den Elektronen und den positiven Löchern im Material entsteht. Diese Ladungstrennung erzeugt ein elektrisches Feld innerhalb der Solarzelle, das dazu führt, dass die freien Elektronen in eine Richtung wandern und einen elektrischen Strom erzeugen, wenn ein externer Stromkreis geschlossen wird.

Alternativ kann ein optoelektronisches Modul auch als ein Modul von einer oder mehreren Leuchtdioden ausgebildet sein. Dabei sind eine oder mehrere Leuchtdioden auf einem solchen Modul angeordnet und elektrisch miteinander verbunden.

Die erfindungsgemäße Testvorrichtung kann die Güte von optoelektronischen Modulen, insbesondere von Solarmodulen oder aber von Modulen von Leuchtdioden, ermitteln. Die Testvorrichtung ist nach einer vorteilhaften Variante als Zellentestvorrichtung ausgebildet, wobei auch direkt die Güte von einzelnen Solarzellen oder einzelnen Leuchtdioden, vorzugsweise innerhalb eines Moduls, bestimmt wird. Vorteilhaft kann so eine direkte Empfehlung für die Weiterverwendung einzelner Zellen, also Solarzellen oder Leuchtdioden, gegeben werden.

### Aufnahmeeinheit

Eine Aufnahmeeinheit, welche auch als Positionierungseinheit bezeichnet werden kann, ist im Sinne der Erfindung eine Einheit an der Testvorrichtung, auf oder an welcher das zu testende Modul oder Bauelement angeordnet werden kann. Es nimmt das optoelektronische Modul oder Bauelement auf und das optoelektronische Modul kann auf der Aufnahmeeinheit positioniert werden.

Die Aufnahmeeinheit ist nach einer möglichen Variante nicht mobil, sondern feststehend ausgebildet. So kann die Aufnahme des optoelektronischen Moduls vorteilhaft kontrolliert erfolgen.

Eine vorteilhafte Ausgestaltung sieht vor, dass die Aufnahmeeinheit innerhalb einer Messstation angeordnet ist. Diese Variante eignet sich besonders dann, wenn mehrere Messeinheiten in dieser Messstation angeordnet sind. Vorteilhaft ist dadurch ein kompakter Aufbau der Testvorrichtung realisierbar. Eine solche Testvorrichtung kann vorteilhaft besonders gut als mobile Testvorrichtung eingesetzt werden.

Optional ist die Aufnahmeeinheit als separate Einheit an einer Beförderungseinheit oder aber als Beförderungseinheit selbst ausgebildet.

Nach einer vorteilhaften Ausgestaltung ist die Aufnahmeeinheit als Förderband ausgebildet. Das optoelektronische Modul oder Bauelement wird auf dem Förderband positioniert und somit durch das Förderband aufgenommen. Nach einer vorteilhaften Ausgestaltung weist die Beförderungseinheit zwei Förderbänder auf, welche parallel ausgebildet sind, und in dieselbe Richtung befördern, also dieselbe Förderrichtung aufweisen. Ein optoelektronisches Modul wird dann im Randbereich, insbesondere mit Abschnitten eines Rahmens des optoelektronischen Moduls, durch beide Förderbänder gleichzeitig befördert. Dabei liegt das optoelektronische Modul an voneinander entgegengesetzten Randbereichen auf den Förderbändern auf. Vorzugsweise ist der Abstand der Förderbänder anpassbar. So kann die Beförderungseinheit auf die Größe eines zu befördernden optoelektronischen Moduls angepasst werden. Das Förderband kann und/oder die Förderbänder können das optoelektronische Modul oder Bauelement bevorzugt automatisiert befördern. Optional weist das Förderband bzw. die Förderbänder eine Stoppfunktion auf, welche vorzugsweise mit einem Sensor gekoppelt ist. Dadurch kann ein Aufnahmevorgang kontrolliert durchgeführt werden und die Gefahr für Beschädigungen wird vorteilhaft reduziert. Durch die Kopplung mit einem Sensor kann die Stoppfunktion direkt automatisiert zum Einsatz kommen.

Eine weitere mögliche Option sieht vor, dass die Aufnahmeeinheit als Greifelement, vorzugsweise nach Art eines Universalhakens, ausgebildet ist. Ein solches Greifelement, insbesondere ein Universalhaken, kann konstruktionsbedingt ein optoelektronisches Modul oder ein optoelektronisches Bauelement, vorzugsweise ein Solarmodul, an dem ein ösenartiges Befestigungselement angeordnet ist, sicher aufnehmen. So kann eine kostengünstige und dennoch ausreichend stabile Positionierung des optoelektronischen Moduls oder des optoelektronischen Bauelementes erreicht werden.

Eine weitere mögliche Ausgestaltung sieht vor, dass die Aufnahmeeinheit als eine mobile Einheit ausgebildet ist. Die mobile Einheit ist nach Art eines Rolltisches entweder manuell zu verschieben oder sie wird mittels eines Motors, welcher eine Antriebseinheit, beispielsweise mit Rollen antreibt, betrieben. Eine manuell zu verschiebende mobile Einheit kann kostengünstig hergestellt und individuell eingesetzt werden. So ist eine modulartige Anpassung an die jeweiligen Gegebenheiten effizient und kostengünstig möglich. Ein Antrieb einer mobilen Einheit mittels eines Motors lässt einen erhöhten Automatisierungsgrad zu. Vorzugsweise kann die mobile Einheit dann gesteuert und automatisiert bewegt werden.

Eine mögliche Ausgestaltung sieht mehrere Aufnahmeeinheiten vor. Dabei ist eine Aufnahmeeinheit jeweils vorzugsweise einer Messstation zugeordnet. Die automatische Modulerkennung erlaubt dabei einen effizienten Test mit einer automatischen Erkennung der Güte eines optoelektronischen Moduls, wobei die Ergebnisse über die Datenausgabeeinheit zugänglich sind. Eine Variante mit mehreren Aufnahmeeinheiten an den einzelnen Messstationen erlaubt vorteilhaft auch auf eine Beförderungseinheit zu verzichten und den Vorgang des Beförderns manuell auszuführen.

Es kann allerdings auch genau eine Aufnahmeeinheit an einer solchen Testvorrichtung vorgesehen sein, wobei das optoelektronische Modul dann vorzugsweise von dieser oder mit dieser zu der Messstation oder zu den Messstationen befördert wird. Bei einem Vorliegen von nur einer Messstation kann auch auf eine Beförderung verzichtet werden, wobei ein Testen des optoelektronischen Moduls dann direkt an der Aufnahmeeinheit erfolgt.

### Kontaktierungseinheit

Die Kontaktierung beschreibt im Sinne der Erfindung insbesondere die elektrische Kontaktierung eines optoelektronischen Moduls oder eines optoelektronischen Bauelements, insbesondere eines Solarmoduls oder einer Solarzelle, zur Messung elektrischer Kenndaten des optoelektronischen Moduls oder eines optoelektronischen Bauelements mittels einer Kontaktierungseinheit. Die Kontaktierungseinheit ist so ausgebildet, dass die elektrische Kontaktierung des optoelektronischen Moduls nur einmal im gesamten Testprozess bzw. Testverfahren erforderlich ist, also die elektrische Kontaktierung über alle Testmessungen, die vorzugsweise in den Messstationen bzw. den Messeinheiten durchzuführen sind, kein weiteres Mal erforderlich ist. Erst an der Kontaktierungslöseeinheit wird die Kontaktierung nach Durchlauf der Testvorrichtung wieder gelöst.

Unter einer Kontaktierungseinheit zum Kontaktieren des optoelektronischen Moduls wird eine Einheit verstanden, mittels derer eine elektrische Kontaktierung des optoelektronischen Moduls realisiert werden kann. Dabei kann diese sowohl als **automatisierte Kontaktierung** erfolgen, bei der Kontaktierungselemente gesteuert an die Kontaktierungsstellen des optoelektronischen Moduls, insbesondere des Solarmoduls oder des optoelektronischen Bauelements, bewegt oder verfahren werden. So kann eine Herstellung eines elektrischen Kontaktes zum Durchführen von elektrischen Eigenschaften des optoelektronischen Moduls weiter verbessert und automatisiert werden.

Vorzugsweise ist die Kontaktierungseinheit also derart ausgebildet, dass eine automatisierte Kontaktierung des optoelektronischen Moduls, vorzugsweise der Solarzelle oder des Solarmoduls, erfolgt. Dadurch wird das Testen der elektrischen Eigenschaften des optoelektronischen Moduls beschleunigt. Zusätzlich reduziert sich die Fehleranfälligkeit aufgrund von Kontaktierfehlern durch manuelles Kontaktieren und es erhöht sich die Personensicherheit, da das Kontaktieren nicht von einem Menschen vorgenommen werden muss.

Nach einer möglichen Ausführungsform ist die Kontaktierungseinheit zum **manuellen Kontaktieren** ausgebildet. Dabei weist die Kontaktierungseinheit vorzugsweise Kontaktierungsklemmen auf, welche manuell an dem optoelektronischen Modul angebracht und wieder gelöst werden. Vorteilhaft ist eine solche Ausführung einfach und kostengünstig herstellbar.

Vorzugsweise weist die Testvorrichtung eine **Dekontaktierungseinheit** auf. Auch diese kann automatisiert ausgebildet sein, wobei die Kontaktierungselemente automatisiert von dem optoelektronischen Modul entfernt werden. Vorteilhaft ist so ein höherer Automatisierungsgrad realisierbar und folglich ein geringes manuelles Eingreifen notwendig. Alternativ können die Kontaktierungselemente an einer Dekontaktierungseinheit auch manuell entfernt werden. Gerade bei einer Verwendung von Kontaktierungsklemmen ist dies kostengünstig umsetzbar und wenig fehleranfällig.

Bevorzugt ist die Kontaktierungseinheit und die Dekontaktierungseinheit **einteilig** ausgebildet und vorzugsweise eingerichtet, mit dem Modul mitbewegt zu werden. Dies kann nach Art eines Kontaktierungsadapters realisiert werden, wobei der Kontaktierungsadapter eingerichtet ist, die elektrische Kontaktierung effizient, beispielsweise über Schleifkontakte, zu realisieren.

### Messstation

Eine Messstation ist im Sinne der Erfindung eine Vorrichtung, an der Messungen an dem optoelektronischen Modul durchführbar sind. Innerhalb einer Messtation können dabei eine oder aber auch mehrere Messeinheiten angeordnet sein. Für die Variante, dass mehrere Messeinheiten an einer Teststation angeordnet sind, sieht eine vorteilhafte Ausgestaltung vor, dass die einzelnen Messeinheiten wenigstens teilweise verfahrbar ausgebildet sind. So kann die Testvorrichtung vorteilhaft sehr kompakt ausgebildet werden, wodurch vorteilhaft ein mobiler Einsatz möglich ist.

Nach einer möglichen Ausgestaltung ist nur eine Messeinheit in einer Messstation vorgesehen, sodass eine schlichte Konstruktion geeignet ist, die Anforderungen zu erfüllen. Dadurch können vorteilhaft die Fertigungskosten einer solchen Messstation reduziert werden. Da auf ein Verfahren der Messeinheiten oder wenigstens von Teilen der Messeinheiten verzichtet werden kann, ist eine solche Messstation weniger fehleranfällig und der Wartungsaufwand kann vorteilhaft reduziert werden. Eine solche Ausgestaltung hat insbesondere bei einer stationären Anwendung große Vorteile.

### Messeinheit

Eine Messeinheit ist im Sinne der Erfindung eine Vorrichtung, die eingerichtet ist, Messungen zur Kontrolle der Güte eines optoelektronischen Moduls, insbesondere eines Solarmoduls, durchzuführen. Dabei wird wenigstens eine Messgröße in Abhängigkeit wenigstens eines äußeren Parameters bestimmt. Die Messeinheit ist dabei vorzugsweise für einen elektrischen Test, beispielsweise den Hochspannungstest, auch als Hipot-Test bezeichnet oder einen Isolationstest, einen Flash-Test oder einen Elektrolumineszenztest ausgebildet. Dabei ist die erste Messeinheit dazu eingerichtet, eine erste Messgröße des optoelektronischen Moduls, vorzugsweise der Solarzelle und/oder des Solarmoduls, in Abhängigkeit wenigstens eines ersten äußeren Parameters zu ermitteln. Bei einem solchen Test wird also beispielsweise der Strom in Abhängigkeit einer Spannung ermittelt. Ein Abgleich der ermittelten Messgrößen mit Referenzwerten ermöglicht dann die Kontrolle der Güte des optoelektronischen Moduls.

Ein äußerer Parameter ist im Sinne der Erfindung eine von außen auf das optoelektronische Modul, vorzugsweise das Solarmodul, einwirkende Größe, wie beispielsweise eine Spannung oder eine elektromagnetische Strahlung einer Wellenlänge und einer Intensität bzw. ein elektromagnetisches Spektrum, welches eine Vielzahl von Wellenlängen einer bestimmten Intensität bzw. in einem bestimmten Intensitätsverhältnis enthält.

Ein äußerer Parameter kann dabei erfindungsgemäß durch einen Nutzer und/oder automatisiert durch die Messstation vorgegeben werden. Beispielsweise kann eine Spannung oder eine elektromagnetische Strahlung, insbesondere ein elektromagnetisches Spektrum oder die Intensität eines elektromagnetischen Spektrums eingestellt werden, bevorzugt durch einen Nutzer, besonders bevorzugt automatisiert. Ein äußerer Parameter kann aber auch durch die Umgebungsbedingungen vorgegeben sein und bei einer Messung entsprechend berücksichtigt werden; beispielsweise kann der Parameter einer Umgebungsstrahlung oder einer Umgebungstemperatur entsprechen.

Nach einer vorteilhaften Ausgestaltung ermöglicht eine Messeinheit das Ermitteln einer Messgröße, beispielsweise des elektrischen Stroms, auch in Abhängigkeit mehrerer, beispielsweise zweier, äußerer Parameter. Ein erster äußerer Parameter kann dabei die angelegte elektrische Spannung und ein zweiter äußerer Parameter kann dabei eine eingestrahlte elektromagnetische Strahlung einer bestimmten Wellenlänge oder eines bestimmten Spektrums sein.

Ein möglicher äußerer Parameter, welcher gemessen und berücksichtigt werden kann, ist die Temperatur während der Messung. Da die Leistung eines optoelektronischen Moduls, insbesondere eines Solarmoduls, aufgrund der enthaltenen Materialien, insbesondere aufgrund der enthaltenen Halbleitermaterialien, stark temperaturabhängig ist, kann eine Berücksichtigung dieses Parameters erreicht werden, was vorteilhaft zu zuverlässigeren und exakteren Ergebnissen führt.

Nach einer vorteilhaften Ausgestaltung ist wenigstens eine Messeinheit bzw. eine Messstation ausgebildet, dass eine lichtabhängige Messung, beispielsweise einen Flash-Test, darin durchführbar ist. Bevorzugt weist die Messeinheit bzw. die Messstation dafür eine Kammer auf, welche kein Licht eindringen lässt, wenn eine Messung durchgeführt werden soll. Die Kammer ist besonders bevorzugt lichtdicht ausgebildet. Eine lichtdichte Ausbildung der Kammer ermöglicht auch eine genaue Durchführung von sehr sensitiven Tests, bei denen das Rauschen durch ein Eindringen von Licht stark erhöht würde. Vorteilhaft kann in einer lichtdichten Kammer ein Elektrolumineszenz-Test an einem Solarmodul oder einer Solarzelle durchgeführt werden.

Als **Flash-Test,** auch als Sonnensimulationstest bezeichnet, wird im Sinne der Erfindung ein Verfahren bezeichnet, bei dem mittels Einwirkung einer elektromagnetischen Strahlung eines vorgegebenen Spektrums, vorzugsweise mittels einer Blitzbelichtung mit einem Belichtungsspektrum, insbesondere eines simulierten Sonnenspektrums, Strom- und Spannungskennwerte ermittelt werden, vorzugsweise mindestens eine Strom-Spannungs-Kennlinie eines Solarmoduls oder einer Solarzelle gemessen wird. Die Lichtquelle zur Belichtung des optoelektronischen Bauelements, insbesondere einer Solarzelle oder eines Solarmoduls oder eines lichtemittierenden Bauelements, wird als Flasher bezeichnet.

Der **Elektrolumineszenz-Test,** auch als EL-Test bezeichnet, wird bei Solarmodulen eingesetzt, um Mikrorisse im Solarzellenmaterial und/oder von Elektrodenstruktur-Unterbrechungen und/oder von Kontaktproblemen zwischen Elektrodenstrukturen und Substrat und/oder elektrisch inaktive Bereiche und/oder lokale Kurzschlüsse der Solarzelle zu erkennen. Der EL-Test erfolgt durch Anlegen einer Testspannung an das Solarmodul, wobei die durch das Solarmodul emittierte Strahlung mit einem Sensor, vorzugsweise einem Nahinfrarotsensor, ermittelt wird. Optional wird der EL-Test auch an einzelnen Solarzellen durchgeführt. Dadurch kann eine eventuelle Fehlstelle einer Solarzelle zugeordnet werden. Der Fehler kann so vorteilhaft zuverlässiger lokalisiert werden. Vorzugsweise wird der der EL-Test an einem optoelektronischen Modul mit mehreren einzelnen Zellen, insbesondere Solarzellen, durchgeführt, wobei eine Einzelauswertung zur Information über die Ergebnisse der einzelnen Solarzellen durch eine nachfolgende Auswertung realisiert werden kann. Ein solches Vorgehen ist schneller und vorteilhaft effizienter.

Ferner können verschiedene elektrische Tests, wie beispielsweise **Isolationstests oder High-potential-Tests,** durchgeführt werden. Bei einem Isolationstest wird ein Verfahren zur Prüfung der elektrischen Isolation eines optoelektronischen Moduls, vorzugsweise eines Solarmoduls oder einer Solarzelle, angewandt. Dabei wird durch Anlegen einer Testspannung zwischen dem Modulrand der Solarzelle bzw. des Solarmoduls einerseits und den nach außen führenden, elektrischen Anschlüssen der Solarzelle bzw. des Solarmoduls andererseits, geprüft, ob das optoelektronische Modul eine ausreichende Isolation aufweist. Beim High potential-Test, auch als HiPot-Test bezeichnet, wird eine hohe Spannung, insbesondere deutlich höher als im Betrieb des Solarmoduls üblich, für eine kurze Zeit angelegt, sodass festgestellt wird, ob sich ein Leckstrom bildet und/oder die dielektrische Festigkeit der Laminierung der Solarzelle bzw. des Solarmoduls ausreichend ist. Dies prüft die elektrische Sicherheit des Solarmoduls und ist vorteilhaft ein geeignetes Kriterium, um die Güte des optoelektronischen Moduls bzw. dessen Alterungsprozesse einschätzen zu können.

Eine Laminierung eines optoelektronischen Moduls ist im Sinne der Erfindung eine vorzugsweise lichtdurchlässige Hülle, vorzugsweise aus Kunststoff (beispw. Ethylen-Vinyl-Acetat(EVA) oder Polyvinylbutyral (PVB)), welche der Fixierung und/oder mechanischen Stabilisierung und/oder besonders auch dem Schutz vor Umwelteinflüssen dient. Diese Hülle schließt das optoelektronische Modul gegenüber der Umwelt ab und schützt dieses damit.

Nach einer vorteilhaften Ausgestaltung ist die erste Messeinheit eingerichtet, den Flash-Test oder einen elektrischen Sicherheitstest, beispielsweise einen HiPot-Test oder einen Isolationstest oder einen Round Bond-Test oder einen Ground Continuity Test, oder den Elektrolumineszenztest durchzuführen.

Vorzugsweise weist die Testvorrichtung eine zweite Messstation auf, welche beabstandet von der ersten Messstation angeordnet ist. Die **zweite Messstation weist vorzugsweise eine zweite Messeinheit** auf, welche datentechnisch mit der Auswerterecheneinheit verbunden ist. Dabei ist die Beförderungseinheit bevorzugt dazu eingerichtet, den räumlichen Abstand des an der ersten Messstation angeordneten kontaktierten optoelektronischen Moduls, vorzugsweise des Solarmoduls, und der zweiten Messstation zu überwinden. Vorzugsweise wird dabei das kontaktierte optoelektronischen Moduls, vorzugsweise das kontaktierte Solarmodul, von der Position der ersten Messstation zur Position der zweiten Messstation befördert. Vorteilhaft kann so an der ersten Messeinheit und an der zweiten Messeinheit parallel getestet werden, wodurch der Durchsatz erhöht werden kann.

Vorzugsweise weist die Testvorrichtung zwei Messstationen mit je einer Kammer auf, welche kein Licht eindringen lässt, bevorzugt lichtdicht ausgebildet ist. So kann vorteilhaft ein Elektrolumineszenztest und ein Flash-Test parallel durchgeführt werden. Dadurch kann vorteilhaft der Durchsatz und somit auch die Effizienz der Testvorrichtung verbessert werden.

Eine besonders vorteilhafte Ausgestaltung sieht vor, dass die Testvorrichtung auch eine **dritte Messstation** aufweist. Dabei ist die dritte Messstation von der ersten und der zweiten Messstation beabstandet angeordnet. Die dritte Messstation weist **eine dritte Messeinheit** auf, welche datentechnisch mit der Auswerterecheneinheit verbunden ist. Dabei ist die Beförderungseinheit bevorzugt dazu eingerichtet den räumlichen Abstand des an der ersten oder der zweiten Messeinheit angeordneten, kontaktierten optoelektronischen Moduls, vorzugsweise des kontaktierten Solarmoduls, und der dritten Messeinheit zu überwinden. Vorzugsweise wird dafür das kontaktierte optoelektronische Modul, vorzugsweise das Solarmodul, von der Position der ersten oder der zweiten Messeinheit zur Position der dritten Messeinheit befördert.

Es ist dabei also eine erste Messeinheit in einer ersten Messstation, eine zweite Messeinheit in einer zweiten Messstation und eine dritte Messeinheit in einer dritten Messstation angeordnet. Jede der Messeinheiten ist datentechnisch mit der Auswerterecheneinheit verbunden.

Die Testvorrichtung weist dabei also wenigstens zwei, vorzugsweise drei, voneinander beabstandet angeordnete, vorzugsweise feststehende, Messstationen auf, in denen jeweils wenigstens eine, vorzugsweise nur eine Messeinheit angeordnet ist. Jede dieser Messeinheiten ist dabei eingerichtet einen, insbesondere nur einen der Tests zur Kontrolle der Güte des optoelektronischen Moduls, also beispielsweise einen elektrischen Sicherheitstest oder einen EL-Test oder einen Flash-Test, durchzuführen, wobei jede Messeinheit einen unterschiedlichen Test durchführt.

Eine Messeinheit ist dabei im Sinne der Erfindung eingerichtet nur einen Test zur Kontrolle der Güte eines optoelektronischen Moduls durchzuführen, wenn eine Art von Test damit durchführbar ist, darunter fällt allerdings auch die Durchführung mehrerer Tests, wenn lediglich ein oder mehrere Parameter, beispielsweise die Testdauer, insbesondere die äußeren Parameter, wie beispielsweise die angelegte Spannung, variiert werden. Eine solche Messeinheit kann beispielsweise eingerichtet sein, einen Isolationstest und auch einen HiPot-Test durchzuführen.

Ein wesentlicher Vorteil ergibt sich dabei also durch eine Ausführungsform, bei der mehrere verschiedene, vorzugsweise wenigstens drei Messstationen mit unterschiedlichen Messeinheiten zur Durchführung unterschiedlicher Tests an der Testvorrichtung angeordnet sind, durch den unkomplizierten Aufbau der Messstationen. Dadurch sind diese Messstationen kostengünstig und wartungsarm realisierbar. Weiterhin können unterschiedliche Tests gleichzeitig an mehreren optoelektronischen Solarmodulen gleichzeitig durchgeführt werden. Somit ist ein schnelles und effizientes Testen an einer kostengünstig herzustellenden Testvorrichtung realisierbar.

Dabei ist also vorzugsweise nur jeweils maximal eine Messeinheit in einer Messstation angeordnet, sodass die Messstationen weniger komplex und so einfacher zu fertigen und weniger fehleranfällig sind. Zusätzlich kann auch an mehreren Messstationen gleichzeitig gemessen werden, wodurch der Durchsatz erhöht werden kann. So ist die Anlage kostengünstiger zu fertigen und die Tests der Solarmodule können wirtschaftlicher umgesetzt werden.

Nach einer vorteilhaften Ausführung weisen wenigstens zwei Messstationen bzw. Messeinheiten wenigstens eine Kammer auf, welche kein Licht eindringen lässt.

Vorzugsweise kann eine Messeinheit einen elektrischen Sicherheitstest, eine der Messeinheiten den Flash-Test und eine der Messeinheiten den EL-Test durchführen. Durch die automatisierte Erkennung und einen Abgleich der Messergebnisse mit einer Datenbank können automatisiert und effizient eine Vielzahl von optoelektronischen Modulen getestet werden.

Vorzugsweise ist die Beförderungseinheit ferner in der Lage das optoelektronische Modul zu einer Dekontaktierungseinheit zu befördern oder es ist eine weitere Beförderungseinheit vorgesehen, welche das optoelektronische Modul zur Dekontaktierungseinheit befördert.

Dabei können eine oder mehrere Messeinheiten innerhalb einer Messstation angeordnet sein. Dabei ist die Reihenfolge, in der die erste Messeinheit, zweite Messeinheit bzw. dritte Messeinheit angeordnet ist, beliebig. Die erste Messeinheit muss nicht zwingend zuerst durch das optoelektronische Modul, vorzugsweise das Solarmodul, passiert werden. Die Messung an der ersten Messeinheit kann auch nach der Messung an einer zweiten Messeinheit durchgeführt werden.

Nach einer bevorzugten Ausgestaltung der Erfindung sind zumindest zwei Messeinheiten, jeweils wie hierin definiert, bspw. die erste Messeinheit und die zweite Messeinheit, zu einer Messstation zusammengefasst. Das ermöglicht einen kompakten Aufbau. Dadurch sind vorteilhaft auch mobile Testvorrichtungen gut realisierbar.

Nach einer weiterhin bevorzugten Ausgestaltung der Erfindung sind zumindest drei Messeinheiten, jeweils wie hierin definiert, bspw. die erste Messeinheit, die zweite Messeinheit und die dritte Messeinheit, zu einer Messstation zusammengefasst. Das ermöglicht einen noch kompakteren Aufbau. Dadurch sind vorteilhaft mobile Testvorrichtungen noch besser realisierbar. Besonders bevorzugt ist die Testvorrichtung als mobile Testvorrichtung innerhalb eines Containers angeordnet. So kann ein Transport der effizienten mobilen Testvorrichtung schnell realisiert werden. Vorzugsweise ist eine mobile Testvorrichtung in ihrer größten Ausdehnung kleiner als 10 m, vorzugsweise kleiner als 6 m, wodurch ein platzsparender Aufbau realisierbar ist.

Es kann dabei vorgesehen sein, dass eine Messeinheit (bspw. die erste Messeinheit) zum Durchführen des Flash-Tests eingerichtet ist, eine weitere der drei Messeinheiten (bspw. die zweite Messeinheit) zum Durchführen des HiPot-Tests eingerichtet ist und eine andere der Messeinheiten (bspw. die dritte Messeinheit) zum Durchführen des Elektrolumineszenz-Tests eingerichtet ist.

### Modultyperkennungeinheit

Eine Modultyperkennungseinheit ist im Sinne der Erfindung eine Vorrichtung, welche mittels Sensoren oder auch einer elektronischen Kamera eine Bestimmung einer Kennung, insbesondere eines Modultyps oder einer Modulbezeichnung, erlaubt. Relevant ist hier, dass sämtliche optoelektronische Module, welche so einem Modultyp oder einer Modulbezeichnung zugeordnet werden können, gewisse Eigenschaften teilen. Vorzugsweise wird durch die Modultyperkennungseinheit direkt die Modulbezeichnung erkannt. Ein Abgleich mit in einer Datenbank hinterlegten Soll-Werten ermöglicht so effizient sehr genaue Ergebnisse über die Güte des optoelektronischen Moduls, insbesondere des Solarmoduls oder der Solarzelle. Optional nutzt die Modultyperkennungseinheit dafür die Auswertungsrecheneinheit oder eine separate Datenverarbeitungseinheit.

Eine Kennung ist im Sinne der Erfindung eine Kennzeichnung, welche an einem optoelektronischen Modul angeordnet und durch eine Modultyperkennungseinheit ermittelbar ist. Eine solche Kennung kann dabei als Barcode oder auch als Zeichencode, wie beispielsweise eine Modulbezeichnung, ausgestaltet sein.

Die Modultyperkennungseinheit weist wenigstens eine Bildaufnahmeeinheit, vorzugsweise eine Kamera, insbesondere eine elektronische Kamera, auf. Nach einer vorteilhaften Ausgestaltung werden die durch die Bildaufnahmeeinheit erfassten Daten an eine Recheneinheit bzw. eine Datenverarbeitungseinheit weitergeleitet, wobei die Recheneinheit den Modultyp und/oder Eigenschaften des optoelektronischen Moduls über einen Abgleich mit in einer Datenbank hinterlegten Daten ermittelt.

Nach einer besonders bevorzugten Ausgestaltung handelt es sich bei der Modultyperkennungsrecheneinheit um eine Recheneinheit, wobei die Bildaufnahmeeinheit mit der Modultyperkennungsrecheneinheit verbunden ist, sodass eine Zuordnung von wenigstens einer auf einem Typenschild vorhandenen Information auswertbar ist. Dadurch kann die Modultyperkennungseinheit automatisiert auf einem Typenschild vorhandene Informationen auswerten. Vorteilhaft erfolgt die Auswertung so schnell und zuverlässig und weist eine geringe Fehleranfälligkeit durch den Verzicht auf eine manuelle Zuordnung auf.

Nach einer möglichen Ausgestaltung weist die Modultyperkennungseinheit weiterhin eine Datenverarbeitungseinheit auf, die den Modultyp oder die Modulbezeichnung oder andere charakteristische Daten ermittelt und an die Auswertungsrecheneinheit weiterleitet. Die Informationen, welche auf dem Typenschild vorhanden, also gespeichert bzw. aufgedruckt sind, können dabei ausgewählt sein aus Typenbezeichnung, Informationen über die Art des Solarmoduls bzw. der auf dem Solarmodul angeordneten Solarzellen. Informationen können also sein, ob die Solarzellen mono- oder polykristallin, ob als Voll- oder Halbzellen, ob als Dünnschicht oder Kristalline Solarzelle ausgebildet sind.

Weiterhin kann ein Modulname und/oder ein Hersteller und/oder Alter des Solarmoduls und/oder weitere charakteristische Daten oder Werte, wie beispielsweise charakteristische Spannungswerte, beispielsweise die Maxima und/oder die Minima, sowie charakteristische elektrische Stromstärken, wie beispielsweise Maxima, ermittelt und erkannt werden. Solche Werte können dabei direkt aus einem Typenschild ausgelesen werden, wodurch vorteilhaft eine direkte Auswertung und Messung realisierbar ist.

Optional wird auch ein Strichcode oder eine Seriennummer erkannt. Dabei sind relevante Daten dann in einer Datenbank hinterlegt, in welcher Informationen zu dem optoelektronischen Modul gespeichert sind.

Vorzugsweise weist die Modultyperkennungseinheit eine Leseeinheit zum Erfassen von Barcodes auf. Dabei ist die Leseeinheit eingerichtet, in Verbindung mit einer Dekodiereinheit einen Barcode zu erkennen. So kann eine einfache und kostengünstige Technik angewandt werden, welche eine Erkennung von Modultypen oder Modulbezeichnungen ermöglicht.

Im Sinne der Erfindung umfasst der Begriff Barcode sowohl 1- als auch 2-dimensionale Codes, welche als Barcode und/oder QR-Codes (Quick Response Codes) bezeichnet werden. Ferner können auch Micro-QR-Codes oder Secure-QR-Codes oder iQR-Codes oder Frame-QR-Codes zum Einsatz kommen. Relevant ist dabei, dass eine eindeutige Zuordnung zu in einer Datenbank hinterlegten Daten erfolgen kann.

Eine Leseeinheit weist nach einer vorteilhaften Ausgestaltung eine Lichtquelle, insbesondere eine Leuchtdiode oder ein Laser, vorzugsweise eine Laserdiode, auf, und einen Lichtsensor auf, wobei der Lichtsensor das reflektierte Licht der Lichtquelle detektieren kann. In Verbindung mit einer Dekodiereinheit wird der Barcode entschlüsselt und die Informationen werden mit einer Datenbank abgeglichen, sodass eine Zuordnung mit Daten aus einer Datenbank erfolgen kann. Diese Variante kann vorteilhaft auch im Dunkeln ein Erfassen des Modultyps und/oder der Modulbezeichnung und/oder weiterer charakteristischer Daten oder Werte oder Parameter realisieren.

Nach einer möglichen Ausgestaltung ist die Leseeinheit derart eingerichtet, dass sie kein Licht emittiert, sondern mittels einer elektronischen Kamera den Barcode erfasst. Dabei werden vorzugsweise 2D-Bild-Scanner und/oder CCD-Scanner verwendet. Vorteilhaft ist dies eine effiziente und exakte Möglichkeit ein Erfassen des Modultyps und/oder der Modulbezeichnung und/oder weiterer charakteristischer Parameter zu realisieren.

Eine vorteilhafte Variante sieht dabei vor, dass sowohl eine Kamera, insbesondere eine elektronische Kamera, als auch eine Leseeinheit zum Erfassen von Barcodes an der Modultyperkennungseinheit ausgebildet ist. Dadurch wird sowohl die Redundanz als auch die Diversität verbessert. Somit ist die Fehlerquote geringer und die Zuverlässigkeit wird erhöht. Gerade bei gebrauchten optoelektronischen Modulen, können Typenschilder beschädigt sein, weshalb ein Vorhandensein zweier Möglichkeiten zur Erkennung des Modultyps oder der Modulbezeichnung oder direkt der charakteristischen Parameter die Erkennungsrate deutlich verbessert und damit die Effizienz der Tests erhöht.

Im Sinne der Erfindung bezieht sich der Begriff Barcodes sowohl auf klassische eindimensionale Strichcodes als auch auf 2D-Codes, bspw. gestapelte Codes wie PDF417, oder Matrix-Codes, wie unter anderem QR-Codes. Vorteilhaft kann durch das Erkennen von 2D-Codes eine größere Menge an Information allein durch Auswerten des Codes für die Testvorrichtung zur Verfügung gestellt werden, und durch zusätzliche Redundanz wird die Fehleranfälligkeit beim Auslesen reduziert.

Nach einer alternativen Ausgestaltung der Erfindung ist die Modultyperkennungseinheit dazu ausgelegt, einen Modultyp durch Auslesen eines Signals basierend auf RFID (radio-frequency identification), insbesondere über ein NFC (near-field communication) oder vergleichbares Protokoll. Zu diesem Zweck kann das Modul eine mittels NFC auslesbare Vorrichtung, insbesondere einen NFC-Tag aufweisen, bestehend aus mindestens einer Antenne und einem Mikrochip, welcher dazu eingerichtet ist, Informationen bezüglich des Moduls bereitzustellen. Vorteilhaft können so auch größere Mengen von Daten kodiert und ausgelesen werden. Dabei erfolgt das Auslesen vorzugsweise über eine induktive Kopplung zwischen dem Auslesegerät und der auslesbaren Vorrichtung. Dabei weist ein solches Auslesegerät im Vergleich zu einem Barcodescanner meist kleinere Dimensionen auf und eignet sich somit vorteilhaft zur Miniaturisierung der Testvorrichtung.

### Automatische Parametereinstellung

Nach einer vorteilhaften Ausgestaltung ist die Modultyperkennungseinheit mit der ersten Messeinheit, vorzugsweise indirekt über eine Recheneinheit, vorzugsweise über die Auswertungsrecheneinheit, verbunden. Bevorzugt ist die Testvorrichtung derart eingerichtet, dass mittels eines Abgleichs mit Daten aus einer Datenbank eine automatische Einstellung des ersten äußeren Parameters an der ersten Messeinheit realisierbar ist. Dafür werden die Daten der Modultyperkennungseinheit in einer Auswertungsrecheneinheit verarbeitet und mit hinterlegten Daten abgeglichen. Die automatische Erkennung ermöglicht eine schnelle Einstellung der äußeren Parameter an der Messeinheit. Somit kann schneller und effizienter getestet werden. Sollte ein Modultyp oder eine Modulbezeichnung dabei nicht hinterlegt sein, so kann eine Mitteilung an den Nutzer ausgegeben werden. Vorzugsweise wird dann direkt ein neuer Eintrag mit den ausgelesenen Soll-Daten in einer Datenbank hinterlegt. Dadurch kann vorteilhaft eine verbesserte Automatisierung erreicht werden.

Ein derart automatisiertes Testen, bei der eine Automatisierung der Messungen in Abhängigkeit vom erkannten Modul erfolgt, erfordert keine separate Einstellung der äußeren Parameter, wie beispielsweise des elektrischen Stroms, da eine automatisierte Anpassung aufgrund der Modultyperkennung erfolgt. Dabei kann hier auf eine Datenbank zugegriffen werden, in der für die einzelnen Module die geeigneten Parameter, wie beispielsweise der maximale Strom, gespeichert sind. Eine solche automatisierte Testvorrichtung bietet den Vorteil, dass der Bediener nur wenige Fachkenntnisse besitzen muss und dennoch eine zuverlässige Zuordnung erfolgt.

Nach einer vorteilhaften Ausgestaltung ist die Testvorrichtung eingerichtet, wenigstens einen äußeren Parameter an zwei oder drei oder allen Messeinheiten einzustellen. Somit wird der Automatisierungsgrad der Testvorrichtung erhöht, wodurch vorteilhaft die Effizienz verbessert wird.

### Funktionsklassen

Nach einer vorteilhaften Ausgestaltung kann eine automatisierte Einteilung der Solarmodule dadurch erfolgen, dass die ermittelte Messgröße oder die ermittelten Messgrößen mit Daten aus einer Datenbank abgeglichen werden, wobei für jeden Modultyp und/oder jede Modulbezeichnung Bereiche oder Werte hinterlegt sind, welche eine Einteilung der einzelnen optoelektronischen Module in Klassen zulassen. Vorteilhaft können so unterschiedliche Funktionsklassen definiert werden und die Solarmodule können automatisch diesen Funktionsklassen zugeordnet werden. Das verbessert die Effizienz des Verfahrens und der Testvorrichtung weiter.

### Beförderungseinheit

Nach einer vorteilhaften Ausgestaltung weist die Testvorrichtung eine Beförderungseinheit auf, die dazu eingerichtet ist, automatisiert einen räumlichen Abstand zwischen einem an der Kontaktierungseinheit angeordneten kontaktierten optoelektronischen Modul und der ersten Messeinheit zu überwinden, vorzugsweise das kontaktierte optoelektronische Modul zur ersten Messeinheit zu befördern oder die erste Messeinheit hin zum kontaktierten, optoelektronischen Modul zu befördern. So ist der Grad der Automatisierung erhöht. Vorteilhaft kann so ein noch effizienteres Testen erfolgen.

Wenn eine Messeinheit zum optoelektronischen Modul, insbesondere zum Solarmodul, befördert wird, so kann vorteilhaft ein optoelektronisches Modul, insbesondere ein Solarmodul, exakt positioniert werden und das Risiko von Beschädigungen an dem optoelektronischen Modul während des Testens ist reduziert.

Das Befördern des optoelektronischen Moduls hingegen ermöglicht einen ortsfesten Aufbau bei fixierter Position der Messeinheiten, sodass die Messeinheiten nicht befördert werden müssen. Dadurch werden nur die leichteren optoelektronischen Module bewegt. Weiterhin ist die Verkabelung der Messeinheiten bei einer ortsfesten Ausbildung einfacher zu realisieren als bei einer beförderten Messeinheit. Zudem ist eine Nachjustage vorteilhaft weniger häufig notwendig und auch weniger aufwändig. Es können damit Ergebnisse mit einer vorteilhaft erhöhten Messgenauigkeit erzielt werden, was auch zu zuverlässigeren Messergebnissen und/oder zuverlässigeren Einteilungen der optoelektronischen Module, insbesondere zuverlässigeren Einteilungen der optoelektronischen Module in Klassen, führt.

Eine Beförderungseinheit weist vorzugsweise Rollen und/oder Ketten und/oder Greifelemente, beispielsweise nach Art eines Universalhakens, auf. Durch eine Beförderung mit flexiblen Beförderungseinheiten, wie beispielsweise Greifelementen und/oder Universalhaken, kann eine Beförderung von optoelektronischen Modulen bedarfsgerecht und variabel erfolgen. Eine Beförderung des optoelektronischen Moduls kann dadurch vorteilhaft sunny side up, also mit der optoelektronisch aktiven Seite nach oben, oder sunny side down, also mit der optoelektronisch aktiven Seite nach unten, oder hängend, also mit der optoelektronisch aktiven Seite zur Seite orientiert, erfolgen.

Nach einer vorteilhaften Ausgestaltung ist die Beförderungseinheit eingerichtet, die optoelektronischen Module, vorzugsweise die Solarmodule, nur am Rahmen zu berühren, sodass die Kraft der Beförderungseinheit nur auf den Rahmen einwirkt, und die beschädigungsanfälligen Bereiche, vor der Einwirkung geschützt sind. Dadurch können Beschädigungen an den optoelektronischen Modulen reduziert werden. Das kann beispielsweise durch zwei parallel verlaufende Förderbänder mit identischer Förderrichtung (wie hierin beschrieben) realisiert werden.

Bevorzugt ist die Beförderungseinheit eingerichtet, sich auf die Größe der optoelektronischen Module anzupassen. Dadurch kann ein exaktes Positionieren auch für unterschiedliche Größen realisiert werden. Es kann dabei eine Anpassung der Spurweite erfolgen, wobei beispielsweise der Abstand der Förderbänder und/oder der Greifelemente und/oder der Universalhaken variabel eingerichtet ist. Vorzugsweise kann zur Einstellung auf die Größe der optoelektronischen Module auch zwischen verschiedenen angepassten Greifelementen gewählt werden.

Nach einer besonders bevorzugten Ausgestaltung erfolgt dabei die Anpassung der Beförderungseinheit auf die Größe des optoelektronischen Moduls durch Einstellung einer Spurweite, vorzugsweise durch Einstellung des Abstandes zweier Förderbänder und/oder zweier Greifelemente und/oder zweier Universalhaken. Somit ist die Beförderungseinheit in unterschiedlichen Ausgestaltungen auf die Größe des optoelektronischen Moduls einstellbar. Vorteilhaft kann daher eine Vielzahl an unterschiedlich dimensionierten Modulen mit der Beförderungseinheit zerstörungsfrei befördert werden.

Eine besonders bevorzugte Variante sieht dabei vor, dass die Einstellung auf das zu befördernde optoelektronische Modul automatisiert erfolgt. Dafür ist die Beförderungseinheit datentechnisch mit der Auswertungsrecheneinheit verbunden. Es erfolgt dabei eine Anpassung der Beförderungseinheit an die Größe der zu befördernden optoelektronischen Module direkt auf der Grundlage der durch die Modultyperkennungseinheit erkannten Modulbezeichnung und/oder des durch die Modultyperkennungseinheit erkannten Modultyps. Vorteilhaft kann so ein nochmals verbesserter, also erhöhter Automatisierungsgrad erreicht werden. Vorzugsweise wird dabei die Spurweite, vorzugsweise der Abstand der Förderbänder und/oder der Greifelemente und/oder der Abstand der Universalhaken, eingestellt.

Eine Spurweite ist dabei im Sinne der Erfindung ist hier der Abstand zwischen den jeweiligen spurführenden Elementen. Spurführende Elemente sind beispielsweise Förderbänder, wenn zwei parallele Förderbänder ein optoelektronisches Modul befördern oder Seitenelemente bzw. Seitenbegrenzungen eines Förderbands. Die Spurweite kann beispielsweise auch durch einen Abstand von Rollen, welche zur Beförderung genutzt werden, bestimmt werden. Möglich zu Festlegung der Spurweite ist auch ein Abstand von Greifelementen und/oder ein Abstand von Universalhaken und/oder ein Abstand von zwei Förderbändern.

Vorzugsweise weist die Testvorrichtung wenigstens zwei, vorzugsweise drei oder vier, voneinander entkoppelte Beförderungseinheiten auf. Dadurch können optoelektronische Module vorteilhaft zwischen mehreren Messtationen effizient transportiert bzw. verfahren werden.

Eine weitere mögliche Ausgestaltung sieht vor, dass die Beförderungseinheit als eine mobile Beförderungseinheit ausgebildet ist. Die mobile Beförderungseinheit ist nach Art eines Rolltisches entweder manuell zu verschieben oder sie wird mittels eines Motors, welcher eine Antriebseinheit, beispielsweise mit Rollen, antreibt, betrieben. Eine manuell zu verschiebende, mobile Beförderungseinheit kann kostengünstig hergestellt und individuell eingesetzt werden. So ist eine modulartige Anpassung an die jeweiligen Gegebenheiten möglich. Ein Antrieb einer mobilen Beförderungseinheit mittels eines Motors lässt einen erhöhten Automatisierungsgrad zu. Vorzugsweise kann die mobile Beförderungseinheit dann gesteuert und automatisiert bewegt werden.

Nach einer vorteilhaften Ausgestaltung weist die Beförderungseinheit wenigstens ein Förderband auf oder ist aus diesem ausgebildet. Das Förderband kann das optoelektronische Modul oder das optoelektronische Bauelement automatisiert befördern. Optional weist das Förderband eine Stoppfunktion auf, welche vorzugsweise mit einem Sensor gekoppelt ist. Dadurch kann die Beförderungseinheit als Aufnahmeeinheit verwendet werden, an der ein Aufnahmevorgang kontrolliert durchgeführt werden kann. Die Gefahr für Beschädigungen bei der Aufnahme wird dadurch vorteilhaft reduziert. Durch die Kopplung mit einem Sensor kann die Stoppfunktion direkt automatisiert zum Einsatz kommen. Ein solches Förderband ist damit sowohl eine Aufnahmeeinheit als auch eine Beförderungseinheit.

Vorzugsweise ist die Beförderungseinheit, vorzugsweise das Förderband, mit einer Beförderungsrecheneinheit datentechnisch verbunden. Eine automatisierte Steuerung der Beförderungseinheit, vorzugsweise des Förderbandes, kann vorteilhaft zu einem kontrollierten und effizienten Testvorgang führen.

Bevorzugt ist eine Beförderungseinheit vorgesehen, welche dreiteilig aus zwei Förderbändern und einer an der Messeinheit angeordneten Modulgreifeinheit ausgebildet ist. Das optoelektronische Modul wird durch eine Modulgreifeinheit von einem Förderband zu einem anderen befördert. Eine Modulgreifeinheit kann beispielsweise Fixierungshaken aufweisen. Dazu kann es auch automatisiert bedient werden, beispielsweise durch einen Roboterarm.

Eine vorteilhafte Ausgestaltung sieht vor, dass die Beförderungseinheit wenigstens einen mobilen Roboter aufweist. Somit kann die Automatisierung erhöht werden, wobei ein sehr flexibler Aufbau in Anpassung an die jeweiligen Gegebenheiten realisierbar ist und auch die manuellen Eingriffe reduziert werden. Vorteilhaft wird die Effizienz des Testens so weiter erhöht. Vorzugsweise ist der mobile Roboter auch als Kontaktierungseinheit ausgebildet. Das ermöglicht einen kompakten Aufbau bei hoher Funktionalität.

### Ergebnis

Nach einer vorteilhaften Ausgestaltung weist die Testvorrichtung, insbesondere auch in einer möglichen Ausgestaltung als Solarmodultestvorrichtung, eine mit der Auswertungsrecheneinheit datentechnisch verbundene Anzeigeeinheit zum Anzeigen des Testergebnisses auf. Die Anzeigeeinheit ist vorzugsweise als eine Leuchte und/oder ein Display ausgebildet. Die Anzeigeeinheit erhält Daten von der Datenausgabeeinheit und kann diese Daten so dem Nutzer zugänglich machen.

Nach einer vorteilhaften Variante weist die Testvorrichtung eine mit der Auswertungsrecheneinheit datentechnisch verbundene Labelanbringeinheit zum Anbringen eines Labels auf einem optoelektronischen Modul, vorzugsweise einem Solarmodul, auf. Ein solches Label wird bevorzugt am Modulrahmen und/oder an der Rückseite des optoelektronischen Moduls angebracht. Die Rückseite ist dabei der lichtsensitiven Seite des optoelektronischen Moduls, vorzugsweise des Solarmoduls, abgewandt. So können die optoelektronischen Module entsprechend ihrer ermittelten Güte weiterverwendet werden und das Testergebnis ist auch im Nachhinein unkompliziert ablesbar.

Vorzugsweise bildet ein solches Label die Informationen bezüglich der Testergebnisse in kompakter Form ab. Beispielsweise kann ein Label dabei die Güte der Solarzelle mittels eines Ampelsystems widerspiegeln, wobei je nach verbleibender erzeugter Leistung und/oder Defektdichte und/oder elektrischer Integrität eine Signalfarbe, bspw. rot, gelb oder grün, zum Einschätzen der Güte vergeben wird. Somit ist die ermittelte Güte vorteilhaft schnell erkennbar.

Alternativ enthält das Label detaillierte Informationen bezüglich der Testergebnisse in einer codierten Form, bspw. als Barcode. Mittels eines entsprechenden Barcodelesegeräts können die Informationen so vorteilhaft automatisiert und/oder manuell abgelesen werden und erlauben somit eine maschinelle Sortierung der optoelektronischen Module gemäß ihrer Güte basierend auf den Testergebnissen.

Vorzugsweise wird dabei eine etablierte Technologie eingesetzt. So können Verfahren zum Vermessen des optoelektronischen Moduls mittels einer Laserdiode verwendet werden. Ein Anbringen eines Labels kann dann mittels eines Druckluft-Applikators umgesetzt werden.

Nach einer vorteilhaften Ausgestaltung sind eine Kontaktierungseinheit und eine erste Messeinheit und eine Labelanbringeinheit voneinander beabstandet angeordnet. Dabei weist die Beförderungseinrichtung ein Förderband auf und ist eingerichtet, ein optoelektronisches Modul, vorzugsweise ein Solarmodul, automatisiert von der Kontaktierungseinheit zur ersten Messeinheit und von der ersten Messeinheit zur Labelanbringeinheit zu befördern. Ein solcher Aufbau ist einfach umzusetzen und wartungsarm. Vorteilhaft ist dadurch eine effiziente Testvorrichtung als besonders wirtschaftliche Lösung umsetzbar.

Nach einer vorteilhaften Ausgestaltung weist die Testvorrichtung auch eine Sortiereinrichtung auf. Die Sortiereinrichtung ist eingerichtet optoelektronische Module nach einem Durchführen des oder der Tests hinsichtlich der mittels der Auswerterecheneinheit ermittelten Ergebnisse vorzugsweise unter Verwendung von Beförderungseinheiten auf verschiedene Paletten und/oder Stapel zu sortieren. Dabei sind wenigstens zwei Klassen von Ergebnissen zu unterscheiden.

Nach einer vorteilhaften Ausgestaltung ist die Testvorrichtung als Sortiervorrichtung ausgebildet. Dafür weist die Testvorrichtung eine oben beschriebene Sortiereinheit auf.

Eine Sortiereinheit weist dabei nach einer vorteilhaften Ausgestaltung eine Auswurfeinheit und/oder eine Dekontaktierungseinheit auf. Vorzugsweise werden bei optoelektronischen Modulen, insbesondere bei Solarmodulen, Stecker, beispielsweise MC4-Stecker, verwendet. Die dazugehörige Buchse wird bevorzugt derart ausgebildet, dass die Klemmsicherung automatisch gelöst werden kann und die Stecker, beispielsweise der MC4-Stecker, des optoelektronischen Moduls, insbesondere des Solarmoduls, durch ein Schiebeelement abgeschoben, also gelöst, wird.

Eine solche automatisierte Testvorrichtung bietet den Vorteil, dass der Bediener dank der zuverlässigen Zuordnung auch ohne entsprechende Fachkenntnisse beurteilen kann, wie gut die einzelnen optoelektronischen Module noch verwendet werden können bzw. ob sie entsorgt werden müssen.

Eine mögliche Ausführung der Sortiervorrichtung sieht vor, dass die Testvorrichtung wenigstens zwei Messeinheiten und ferner eine Zwischensortiereinheit aufweist. Eine solche Zwischensortiereinheit ist dadurch gekennzeichnet, dass sie eine Einteilung in wenigstens zwei Klassen, vorzugsweise genau zwei Klassen, vornimmt, wobei dies vom Ergebnis der vorhergehenden Messung in der vorhergehenden Messeinheit abhängig ist. Es können dadurch also jene optoelektronische Module aussortiert werden, welche einen Test oder eine Messung nicht bestanden haben bzw. gewisse Kriterien nicht erfüllen. Wenn beispielsweise ein optoelektronisches Modul unzureichende Messwerte in einem elektrischen Sicherheitstest zeigt, so kann eine weitere Verwendung bereits dadurch ausgeschlossen sein oder wenigstens eine Reparatur erfordern.

Bei einer Ausgestaltung einer Testvorrichtung als Sortiervorrichtung, bei der mehrere Messeinheiten in einer Messstation angeordnet sind, kann eine Sortiereinheit, welche eine Ausgabe entsprechend der Einteilung in Bewertungsklassen vornimmt, auch als Zwischensortiereinheit fungieren, bei der die optoelektronischen Module, welche vorgegebene Anforderungen nicht erfüllen, vor dem Durchführen weiterer Messungen aussortiert werden. Dies ermöglicht vorteilhaft eine effiziente und kompakte Ausgestaltung einer Sortiervorrichtung, insbesondere auch für einen Einsatz als mobile Sortiervorrichtung.

Dabei kann die Sortiervorrichtung sämtliche Merkmale einer hierin beschriebenen Testvorrichtung aufweisen.

### Verfahren

Die Erfindung betrifft auch ein Verfahren zum automatisierten Testen eines optoelektronischen Moduls, vorzugsweise mit einer Testvorrichtung gemäß einem der Ansprüche 1 bis 21, welches folgende Schritte aufweist:
a) Positionieren des optoelektronischen Modules an einer Aufnahmeeinheit, welche optional direkt an einer Beförderungseinrichtung angeordnet ist bzw. als ein Bestandteil einer Beförderungseinheit, wie beispielsweise eines Förderbandes, ausgebildet ist;
b) Elektrisches Kontaktieren des optoelektronischen Modules;
c) Durchführen eines Tests zur Kontrolle der Güte eines optoelektronischen Bauelementes, wobei während des Tests eine erste Messgröße in Abhängigkeit wenigstens eines ersten äußeren Parameters ermittelt wird, an einer ersten Messeinheit, wobei die erste Messeinheit zur Durchführung eines Tests eingerichtet ist. Dabei ist der Test vorzugsweise ausgewählt aus einem Elektrolumineszenz-Test, einem elektrischen Sicherheitstest, auch als elektrischer Test bezeichnet, wie beispielsweise dem HiPot-Test oder einem Isolationstest, sowie einem Flash-Test;
d) Übertragen der an der ersten Messeinheit ermittelten ersten Messgröße an eine Auswertungsrecheneinheit;
e) Abgleichen der ersten durch die erste Messeinheit ermittelten Messgrößen mit Soll-Messwerten aus einer Datenbank, woraus eine Abweichung von den Soll-Messwerten ermittelbar ist,
f) Ermitteln eines Ergebnisses, vorzugsweise Einteilen des Modules in eine Bewertungsklasse, und
g) Ausgeben des Ergebnisses des Abgleichs mittels einer Datenausgabeeinheit
h) Lösen der elektrischen Kontaktierung des optoelektronischen Moduls, vorzugsweise des Solarmoduls
wobei vor dem Ermitteln einer ersten Messgröße gemäß Schritt c), vorzugsweise vor dem elektrischen Kontaktieren gemäß Schritt b), ein Identifizieren eines Modultyps und/ oder einer Modulbezeichnung, auch als Modultyperkennung bezeichnet, erfolgt. Dabei kann die Modultyperkennung bereits vor dem Positionieren gemäß Schritt a) erfolgen.

Dabei erfolgt ein Einstellen von Parametern bei der Durchführung eines Tests gemäß Schritt c), insbesondere des ersten äußeren Parameters gemäß Schritt c) und/ oder ein Einstellen eines zweiten äußeren Parameters, bevorzugt automatisiert auf der Grundlage des identifizierten Modultyps. So kann beispielsweise ein automatisches Einstellen des Flashers in Abhängigkeit vom identifizierten Modultyp erfolgen. So kann der Automatisierungsgrad erhöht werden und die Notwendigkeit manueller Eingriffe vorteilhaft reduziert werden. Nach dem Durchführen eines Tests bzw. einer Messung an der ersten Messeinheit kann ein weiterer Test bzw. eine zweite Messung an einer zweiten Messeinheit durchgeführt werden.

Die Messung an der ersten Messeinheit kann dabei auch nach der Messung an der zweiten Messeinheit durchgeführt werden. Die Reihenfolge der Tests kann unterschiedlich nach den jeweiligen Gegebenheiten durchgeführt werden.

Vorzugsweise wird bei dem Verfahren vor dem Ermitteln der ersten Messgröße ein Überwinden eines räumlichen Abstands zwischen dem an der Kontaktierungseinheit angeordneten, kontaktierten optoelektronischen Modul und einer ersten Messeinheit, vorzugsweise ein Befördern des kontaktierten optoelektronischen Moduls, vorzugsweise der kontaktierten Solarzelle oder des kontaktierten Solarmoduls, von der Kontaktierungseinheit zur Messeinheit, alternativ ein Befördern der ersten Messeinheit hin zum kontaktierten optoelektronischen Modul, vorzugsweise zum kontaktierten Solarmodul, durchgeführt bzw. erfolgt. So kann der Automatisierungsgrad erhöht werden und die Notwendigkeit manueller Eingriffe vorteilhaft reduziert werden. Somit können Fehler reduziert und die Effizienz erhöht werden.

Ein Ergebnis kann dabei beispielsweise die Differenz zwischen Soll- und Istwerten oder auch eine entsprechende Bewertungsklasse sein.

Bevorzugt umfasst das Verfahren folgende weitere Schritte:
- Überwinden eines räumlichen Abstands von dem an der ersten Messeinheit angeordneten, kontaktierten optoelektronischen Modul zu einer zweiten Messeinheit,
- Ermitteln einer zweiten Messgröße in Abhängigkeit eines zweiten äußeren Parameters und
- Übertragen der an der zweiten Messeinheit ermittelten zweiten Messgröße an die Auswertungsrecheneinheit.

So können auch die Ergebnisse, also die Messgrößen, des zweiten Tests zur Beurteilung der Güte des optoelektronischen Moduls genutzt werden. Bevorzugt werden bei der Beurteilung dann also die Ergebnisse der ersten Messeinheit und die Ergebnisse der Messung mit der zweiten Messeinheit berücksichtigt. Vorteilhaft ist die Beurteilung so zuverlässiger.

Eine vorteilhafte Variante des Verfahrens sieht vor, dass das Verfahren auch den weiteren Schritt des Ermittelns der Leistungsfähigkeit des optoelektronischen Moduls, vorzugsweise des Solarmoduls, auf der Grundlage der in Schritt c) gemessenen ersten Messgröße und/oder der zweiten Messgröße, aufweist. Dabei werden die gemessenen Werte mit in einer Datenbank hinterlegten Werten verglichen. So kann ein direktes Maß für die Güte eines optoelektronischen Moduls als Ergebnis der Messung ausgegeben werden. Ein solches Verfahren ermöglicht vorteilhaft eine einfache und unkomplizierte Bestimmung der Leistungseigenschaften und insbesondere auch der Güte von optoelektronischen Modulen. Vorteilhaft muss der Bediener dabei nur wenige Fachkenntnisse besitzen, wodurch Fehler vorteilhaft reduziert werden können.

Dabei sieht das Ermitteln der Leistungsfähigkeit vorzugsweise ein Einteilen in Leistungsklassen vor, wobei das Einteilen in Leistungsklassen auf einem Abgleich mit Referenzwerten beruht. Nach einer besonders bevorzugten Variante erfolgt daraufhin auch eine maschinelle Sortierung entsprechend der Einteilung. Dabei werden Leistungsklassen festgelegt und vorzugsweise in der Datenbank hinterlegt. Die Leistungsklassen sind dabei als Soll-Messwerte definierbar und es wird ein Abgleich mit den ermittelten Messwerten bzw. Ergebnissen der Tests, also mit den ermittelten Ist-Messwerten durchgeführt. Es ist hier möglich, starre Grenzen der Leistungsklassen zu hinterlegen, was sich beispielsweise bei den elektrischen Sicherheitstests anbietet, da hier bestimmte Werte, insbesondere der Isolation, nicht unter- bzw. überschritten werden sollen. Es kann allerdings auch eine prozentuale Festlegung sein, was sich insbesondere bei Tests zur Ermittlung der Leistungsfähigkeit anbietet. So könnte ein Unterschreiten einer gewissen Schwelle von beispielsweise 75 %, bevorzugt 60 %, der hinterlegten maximalen Leistungsfähigkeit, eine Grenze sein, ab der ein Weiterbetreiben unterbleiben sollte. Vorzugsweise erfolgt ein Einteilen in wenigstens zwei, vorzugsweise wenigstens drei, besonders bevorzugt wenigstens vier Klassen. Dadurch kann ein Bediener schnell Einschätzen ob und wie ein optoelektronisches Modul weiterverwendet werden kann oder ob eine Entsorgung erfolgen sollte.

Es wird also gemäß dieser Ausgestaltung eine maschinelle Sortierung entsprechend der Leistungsklassen durchgeführt.

Nachfolgend erfolgt optional ein automatisiertes Anbringen eines Labels, vorzugsweise mit im Testverfahren ermittelten Leistungseigenschaften des optoelektronischen Moduls, vorzugsweise des Solarmoduls, an dem optoelektronischen Modul, vorzugsweise an dem Solarmodul. Dadurch können die optoelektronischen Module auch später unkompliziert den einzelnen Leistungsklassen zugeordnet werden.

### Konzeption

Nach der Konzeption der Erfindung wird eine Testvorrichtung zur Verfügung gestellt, bei der ein schnelles und effizientes Testen von optoelektronischen Modulen, insbesondere von Solarmodulen möglich ist. Auf oder an einer Aufnahmeeinheit kann ein optoelektronisches Modul angeordnet bzw. positioniert werden, welches dann in einer in einer Messstation angeordneten Messeinheit, welche mit einer Auswerterecheneinheit datentechnisch verbunden ist, derart getestet bzw. einer Messung unterzogen wird, dass eine Kontrolle der Güte des optoelektronischen Moduls möglich ist. Die Testvorrichtung weist erfindungsgemäß auch eine Modultyperkennungseinheit auf, welche ebenfalls mit der Auswerterecheneinheit datentechnisch verbunden ist. Die Modultyperkennungseinheit erfasst eine Kennung, vorzugsweise eine Modulbezeichnung und/oder einen Modultyp, des optoelektronischen Moduls und leitet diese an die Auswerterecheneinheit weiter. Dadurch kann mittels der Auswerterecheneinheit eine Zuordnung dieser Kennung durchgeführt werden, was einen Abgleich der Ergebnisse des Tests bzw. der Messung mit Referenzwerten aus einer Datenbank ermöglicht. Damit ist eine Einschätzung der Ergebnisse und vorzugsweise auch eine automatisierte Einteilung der optoelektronischen Module, insbesondere der Solarmodule, entsprechend den Ergebnissen der Messungen bzw. Tests möglich. Dies ermöglicht eine effiziente Kontrolle der Güte eines optoelektronischen Moduls.

### Ausführungsbeispiele

Anhand folgender Figuren und Ausführungsbeispiele wird die vorliegende Erfindung näher erläutert, ohne die Erfindung auf diese zu beschränken. Insbesondere sind in den einzelnen Figuren gezeigte und zu dem jeweiligen Beispiel beschriebene Merkmale nicht auf das jeweilige Einzelbeispiel beschränkt.

Es zeigen:
- **Fig. 1:**: Das Prinzip einer erfindungsgemäßen Testvorrichtung.
- **Fig. 2:**: Das Prinzip einer Testvorrichtung mit einer angeschlossenen Sortiereinheit.
- **Fig. 3:**: Eine schematische Darstellung einer Testvorrichtung mit drei Messeinheiten in drei Messstationen.
- **Fig. 4:**: Eine schematische Darstellung einer mobilen Testvorrichtung mit einer Messstation, in der mehrere Messeinheiten angeordnet sind.

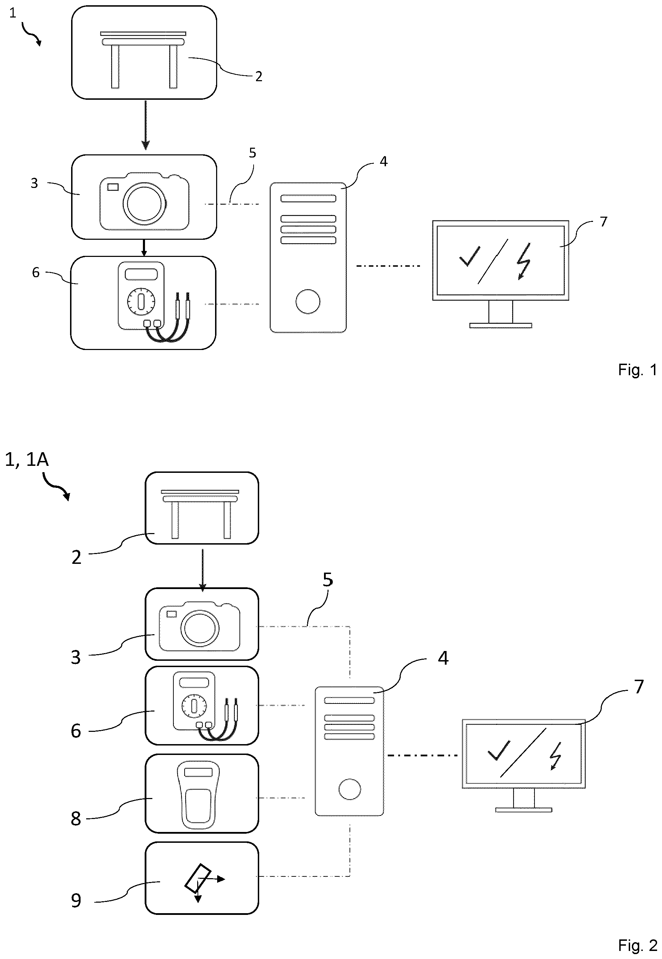

In **Fig. 1** ist die prinzipielle Funktionsweise einer Testvorrichtung 1 zum automatisierten Testen eines optoelektronischen Moduls, insbesondere zur Kontrolle der Güte eines optoelektronischen Moduls, dargestellt. Nach einer Aufnahme des, hier nicht dargestellten, optoelektronischen Moduls, bei dem es an einer Aufnahmeeinheit 2 angeordnet bzw. positioniert wird, erfolgt eine Modulerkennung bzw. eine Modultyperkennung an einer Modultyperkennungseinheit 3. Dabei wird eine an dem optoelektronischen Modul angeordnete Kennung, beispielsweise ein auf einem Label aufgedruckter Barcode oder eine Modulbezeichnung, erfasst und an eine Auswerterecheneinheit 4 weitergeleitet. Diese Auswerterecheneinheit 4 ist weiterhin über eine datentechnische Verbindung 5 mit einer Messeinheit 6 verbunden. Das optoelektronische Modul kann durch die Messeinheit 6 getestet werden, wobei also in der Messeinheit 6 eine Messung, wie beispielsweise ein elektrischer Sicherheitstest oder ein Flash-Test, durchgeführt wird. Die Messergebnisse werden dann an die Auswerterecheneinheit 4 weitergeleitet.

Die Auswerterecheneinheit 4 ist dabei eingerichtet, einen Abgleich mit für dieses optoelektronische Modul hinterlegten Daten durchzuführen und ein Ergebnis des Abgleichs an die Datenausgabeeinheit 7, beispielsweise eine Leuchte oder eine digitale Anzeige, weiterzuleiten. Das Ergebnis des Tests wird daraufhin durch die Datenausgabeeinheit 7 angezeigt.

In **Fig. 2** ist die prinzipielle Funktionsweise einer Testvorrichtung 1 dargestellt, bei der die Ergebnisse der Messungen und/oder des durch die Auswerterecheneinheit 4 ermittelten Abgleichs an eine Labelanbringungseinheit 8 weitergeleitet werden. Eine solche Labelanbringungseinheit 8 ist eingerichtet, ein Label bzw. ein Etikett oder ein anderes Kennzeichnungselement mit entsprechenden Informationen an einem optoelektronischen Modul, vorzugsweise an einem Solarmodul, anzubringen. Relevante Informationen können dabei beispielsweise eine Eigenschaft des optoelektronischen Moduls bzw. Messergebnisse oder eine Information über das Erfüllen bestimmter Kriterien, also zum Beispiel "bestanden" oder "nicht bestanden", sein. Weiterhin ist die in Fig. 2 dargestellte Testvorrichtung 1 als Sortiervorrichtung 1A ausgebildet, bei der zusätzlich zu der in Fig. 1 dargestellten Variante der Testvorrichtung 1 auch eine Sortiereinheit 9 angeordnet ist. Die optoelektronischen Module werden entsprechend der Ergebnisse der Messung bzw. des Tests in der Messeinheit 6 durch die Auswerterecheneinheit 4 in vorher definierte und in einer Datenbank hinterlegte Klassen eingeteilt und entsprechend dieser Klassen durch die Sortiereinheit 9 sortiert und vorzugsweise auf unterschiedliche Stapel geschichtet oder wenigstens durch unterschiedliche Ausgabeeinrichtungen ausgegeben.

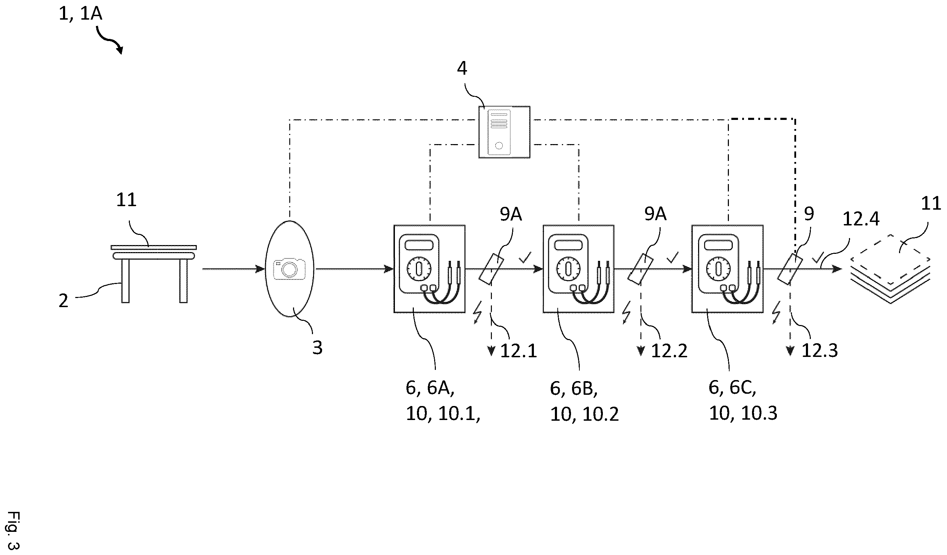

Eine Ausgestaltung einer Testvorrichtung 1, welche ebenfalls als Sortiervorrichtung 1A ausgebildet ist, welche allerdings drei Messtationen 10 mit jeweils einer Messeinheit 6 aufweist, ist in **Fig. 3** dargestellt. Ein optoelektronisches Modul 11 wird an der Aufnahmeeinheit 2 angeordnet bzw. positioniert. Durch die Modultyperkennungseinheit 3 wird eine Kennung des optoelektronischen Moduls 11 erfasst und an die Auswerterecheneinheit 4 weitergeleitet. Die Auswerterecheneinheit 4 ist weiterhin über eine datentechnische Verbindung 5 mit jeder der drei Messstationen 10 und insbesondere mit jeder der drei an den Messstationen 10 angeordneten Messeinheiten 6 verbunden. Weiterhin ist an der dritten Messstation 10.3 eine Sortiereinheit 9 angeordnet, welche aufgrund einer Klassifikation, welche durch die Auswerterecheneinheit 4 durchgeführt wird, die optoelektronischen Module auf unterschiedliche Stapel sortiert. Weiterhin sind zwischen den einzelnen Messstationen 10.1, 10.2, 10.3 zwei Zwischensortiereinheiten 9A angeordnet. Eine solche Zwischensortiereinheit 9A ist dadurch gekennzeichnet, dass sie eine Einteilung in genau zwei Klassen vornimmt, wobei dies vom Ergebnis der vorhergehenden Messung in der vorhergehenden Messeinheit 6 abhängig ist. Es werden hier also jene optoelektronische Module 11 aussortiert, welche einen Test oder eine Messung nicht bestanden haben bzw. gewisse Kriterien nicht erfüllen. Wenn beispielsweise ein optoelektronisches Modul 11 unzureichende Messwerte in einem elektrischen Sicherheitstest zeigt, so kann eine weitere Verwendung bereits dadurch ausgeschlossen sein bzw. wenigstens eine Reparatur erfordern. Wenn das optoelektronische Modul 11 also den Test in der ersten Messstation 10.1 durch die erste Messeinheit 6A nicht besteht, so wird es an eine erste Ausgabeeinheit 12.1 ausgegeben. Wenn das optoelektronische Modul 11 jedoch den ersten Test in der ersten Messstation 10.1 durch die erste Messeinheit 6A besteht, so wird es an die zweite Messstation 10.2 mit einer zweiten Messeinheit 6B weitergeleitet. Eine Weiterleitung zwischen den einzelnen Bestandteilen der Testvorrichtung 1 kann dabei manuell oder automatisiert mittels einer hier nicht dargestellten Beförderungseinheit durchgeführt werden. Ein optoelektronisches Modul 11, welches einen Test an der zweiten Messeinheit 6B nicht besteht wird dann an eine zweite Ausgabeeinheit 12.2 ausgegeben. Eine optoelektronisches Modul 11, welches sowohl den Test in der ersten Messeinheit 6A als auch den Test in der zweiten Messeinheit 6B besteht, wird dann an die dritte Messstation 10.3 weitergeleitet. Wenn es den Test durch die dritte Messeinheit 6C nicht besteht, so wird es an eine dritte Ausgabeeinheit 12.3 ausgegeben. Ein optoelektronisches Modul 11, welches alle drei Tests bestanden hat, wird dann an die vierte Ausgabeeinheit 12.4 ausgegeben. Eine solche als Sortiervorrichtung 1A ausgebildete Testvorrichtung 1 kann dabei sowohl weitere als auch weniger Messstationen 10 aufweisen. Dies gilt auch für die Sortiereinheiten 9 und die Zwischensortiereinheiten 9A.

Die in Fig. 3 dargestellt Variante hat den großen Vorteil, dass eine einfache Konstruktion, bei der jeweils nur eine Messeinheit 6 in einer Messstation 10 angeordnet ist, wartungsarm ist und parallele Tests an mehreren optoelektronischen Modulen 11 gleichzeitig durchgeführt werden können. Durch die Zwischensortiereinheiten 9A kann auf unnötige Tests bzw. Messungen verzichtet werden, wodurch eine verbesserte Effizienz der Tests und ein höherer Durchsatz erreicht werden kann. Hier spielt auch die unterschiedliche Dauer der Tests eine Rolle. Wenn bei einigen optoelektronischen Modulen 11 auf einen aufwändigeren und insbesondere langwierigeren Test oder sogar auf mehrere Tests verzichtet werden kann, so kann der Durchsatz durch die Sortiervorrichtung 1A erhöht werden.

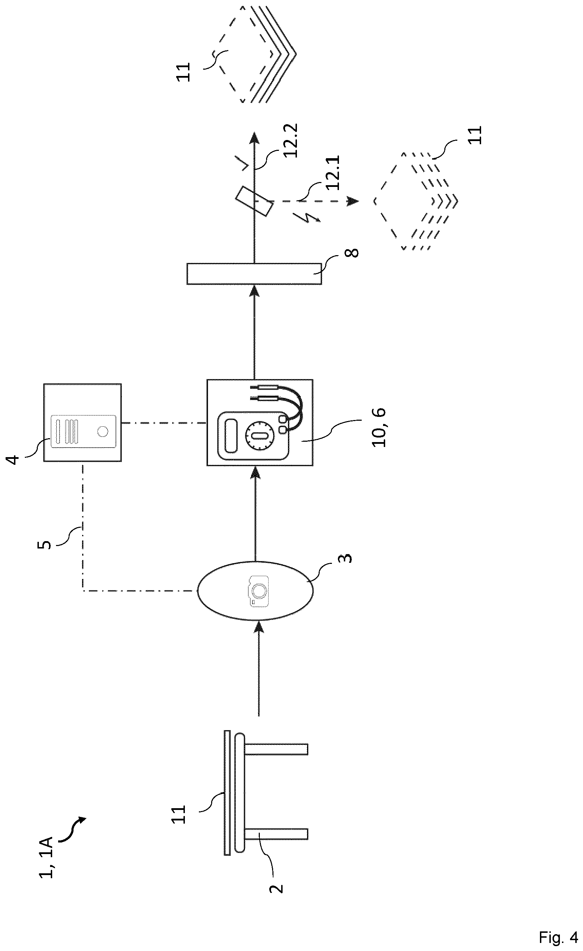

Eine als Sortiervorrichtung 1A ausgebildete Testvorrichtung 1 ist auch in **Fig. 4** dargestellt. An der Aufnahmeeinheit 2 wird ein optoelektronisches Modul 11, vorzugsweise ein Solarmodul, positioniert. Durch die Modultyperkennungseinheit 3 wird eine Kennung des optoelektronischen Moduls 11 erfasst und über eine datentechnische Verbindung 5 an die Auswerterecheneinheit 4 weitergegeben. In diesem Ausführungsbeispiel ist nur eine Messstation 10 mit einer Messeinheit 6 vorgesehen. Es können in dieser einen Messstation 10 allerdings auch zwei oder drei oder mehr Messeinheiten 6 angeordnet sein. Eine derart kompakte Ausgestaltung, insbesondere 3 in 1, also drei Messeinheiten 6 in einer Messstation 10, eignet sich dabei besonders gut für einen mobilen Einsatz als mobile Testvorrichtung 1, vorzugsweise als mobile Sortiervorrichtung 1A. Es ist in diesem Ausführungsbeispiel weiterhin eine Labelanbringungsvorrichtung 8 vorgesehen, auf welche allerdings auch verzichtet werden kann, wobei dann eine Datenausgabe an eine andere Datenausgabeeinheit, beispielsweise ein Display oder eine Leuchte vorgesehen ist. Eine Sortiereinheit 9 teilt die optoelektronischen Module 11 entsprechend ihrer Messergebnisse in zwei Klassen ein. Die eingeteilten optoelektronischen Module 11 werden dann an eine erste Ausgabeeinheit 12.1 und an eine zweite Ausgabeeinheit 12.2 weitergegeben. Dabei kann auch eine Einteilung in mehr als zwei Klassen erfolgen, wobei auch mehr als zwei Ausgabeeinheiten 12.1, 12.2 vorgesehen sein können.

### Bezugszeichenliste

- 1: Testvorrichtung
- 1A: Sortiervorrichtung
- 2: Aufnahmeeinheit
- 3: Modultyperkennungseinheit
- 4: Auswerterecheneinheit
- 5: Datentechnische Verbindung
- 6: Messeinheit
- 6A: Erste Messeinheit
- 6B: Zweite Messeinheit
- 6C: Dritte Messeinheit
- 7: Datenausgabeeinheit
- 8: Labelanbringungseinheit
- 9: Sortiereinheit
- 9A: Zwischensortiereinheit
- 10: Messstation
- 10.1: Erste Messstation
- 10.2: Zweite Messstation
- 10.3: Dritte Messstation
- 11: Optoelektronisches Modul
- 12: Ausgabeeinheit
- 12.1: Erste Ausgabeeinheit
- 12.2: Zweite Ausgabeeinheit
- 12.3: Dritte Ausgabeeinheit
- 12.4: Vierte Ausgabeeinheit

## Patentansprüche

1. **Testvorrichtung** (1) zum automatisierten Testen eines optoelektronischen Moduls, insbesondere einer Solarzelle oder eines Solarmoduls oder eines lichtemittierenden Bauelements, aufweisend:
- eine Aufnahmeeinheit (2) zum Aufnehmen eines optoelektronischen Moduls;
- eine Kontaktierungseinheit zum Kontaktieren des optoelektronischen Moduls,
- eine erste Messstation (10.1), aufweisend wenigstens eine erste Messeinheit (6A) für eine Leistungsüberprüfung an dem optoelektronischen Modul
wobei die erste Messeinheit (6A) dazu eingerichtet ist, eine erste Messgröße des optoelektronischen Moduls in Abhängigkeit wenigstens eines ersten äußeren Parameters zu ermitteln,
- eine Modultyperkennungseinheit (3), die eingerichtet ist, eine Kennung des optoelektronischen Moduls zu bestimmen,
- eine Datenausgabeeinheit (7) und
- eine Auswertungsrecheneinheit (4), welche datentechnisch mit der ersten Messeinheit (6A), der Modultyperkennungseinheit (3) und der Datenausgabeeinheit (7) verbunden ist,
wobei die von der Modultyperkennungseinheit (3) an die Auswertungsrecheneinheit (4) übermittelte Kennung eine Zuordnung des optoelektronischen Moduls zu Soll-Messgrößen aus einer Datenbank erlaubt,
wobei die Auswertungsrecheneinheit (4) eingerichtet ist, ein Ergebnis eines Abgleichs der durch die erste Messeinheit (6A) ermittelten ersten Messgröße mit den zugeordneten Soll-Messgrößen mittels der Datenausgabeeinheit (7) auszugeben.

2. Testvorrichtung (1) nach Anspruch 1, wobei die Modultyperkennungseinheit (3) mit der ersten Messeinheit (6A) verbunden ist und mittels eines Abgleichs mit Daten aus einer Datenbank eine automatische Einstellung des ersten äußeren Parameters an der ersten Messeinheit (6A) realisierbar ist.

3. Testvorrichtung (1) nach einem der Ansprüche 1 bis 5, wobei die Testvorrichtung eine mit der Auswertungsrecheneinheit (4) datentechnisch verbundene Anzeigeeinheit zum Anzeigen des Testergebnisses, vorzugsweise eine Leuchte oder ein Display, aufweist.

4. Testvorrichtung (1) nach einem der Ansprüche 1 bis 6, wobei die erste Messeinheit (6A) eingerichtet ist den Flash-Test oder einen elektrischen Test, beispielsweise einen HiPot-Test oder einen Isolationstest oder einen Round Bond-Test oder einen Ground Continuity Test, oder den Elektrolumineszenztest durchzuführen.

5. Testvorrichtung (1) nach einem der Ansprüche 1 bis 8, ferner aufweisend eine Beförderungseinheit, die dazu eingerichtet ist, automatisiert einen räumlichen Abstand zwischen einem an der Kontaktierungseinheit angeordneten kontaktierten optoelektronischen Modul und der ersten Messeinheit (6A) zu überwinden, vorzugsweise das kontaktierte optoelektronische Modul zur ersten Messeinheit (6A) zu befördern oder die erste Messeinheit (6A) hin zum kontaktierten, optoelektronischen Modul zu befördern.

6. Testvorrichtung (1) nach einem der Ansprüche 9 bis 13, wobei die Beförderungseinheit auf die Größe des optoelektronischen Moduls anpassbar ausgebildet ist.

7. Testvorrichtung (1) nach einem der Ansprüche 1 bis 18, wobei eine erste Messstation (10.1) zwei Messeinheiten aufweist und eingerichtet ist, wenigstens zwei Tests ausgewählt aus dem Flash-Test dem HiPot-Test und dem Elektrolumineszenztest durchzuführen.

8. Testvorrichtung (1) nach einem der Ansprüche 1 bis 20, wobei die Testvorrichtung (1) eine Dekontaktierungseinheit aufweist.

9. Testvorrichtung (1) nach einem der Ansprüche 1 bis 22, wobei die Testvorrichtung eine mit der Auswertungsrecheneinheit (4) datentechnisch verbundene Labelanbringeinheit (8) zum Anbringen eines Labels auf einem optoelektronischen Modul, vorzugsweise einem Solarmodul, aufweist.

10. Testvorrichtung (1) nach einem der Ansprüche 1 bis 24 ferner aufweisend eine Sortiereinheit (9).

11. **Verfahren** zum automatisierten Testen eines optoelektronischen Moduls, vorzugsweise mit einer Testvorrichtung (1) gemäß einem der Ansprüche 1 bis 25, aufweisend folgende Schritte:
a) Positionieren des optoelektronischen Modules an einer Aufnahmeeinheit (2)
b) Elektrisches Kontaktieren des optoelektronischen Modules;
c) Durchführen eines Tests zur Kontrolle der Güte eines optoelektronischen Bauelementes an einer ersten Messeinheit (6A), wobei eine erste Messgröße ermittelt wird,
d) Übertragen der ersten Messgröße an eine Auswertungsrecheneinheit (4);
e) Abgleichen der ersten Messgrößen mit Soll-Messwerten aus einer Datenbank,
f) Ermitteln eines Ergebnisses, vorzugsweise Einteilen des Modules in eine Bewertungsklasse, und
g) Ausgeben des Ergebnisses des Abgleichs
wobei vor dem Ermitteln einer ersten Messgröße gemäß Schritt c), ein Identifizieren eines Modultyps und/ oder einer Modulbezeichnung erfolgt.

12. Verfahren nach Anspruch 26, wobei ein Einstellen von Parametern bei der Durchführung eines Tests gemäß Schritt c) automatisiert auf der Grundlage des identifizierten Modultyps erfolgt.

13. Verfahren nach Anspruch 28, ferner umfassend folgende Schritte:
- Überwinden eines räumlichen Abstands von dem an der ersten Messeinheit (6A) angeordneten, kontaktierten optoelektronischen Modul zu einer zweiten Messeinheit (6B),
- Ermitteln einer zweiten Messgröße in Abhängigkeit eines zweiten äußeren Parameters und
- Übertragen der zweiten Messgröße an die Auswertungsrecheneinheit (4).

14. Verfahren nach einem der Ansprüche 26 bis 29, ferner umfassend folgenden Schritt: Ermitteln der Leistungsfähigkeit des optoelektronischen Moduls, vorzugsweise des Solarmoduls, auf der Grundlage der in Schritt c) gemessenen ersten Messgröße und/oder der zweiten Messgröße,
wobei die gemessenen Werte mit in einer Datenbank hinterlegten Werten verglichen werden.

15. Verfahren nach einem der Ansprüche 26 bis 30, wobei das Ermitteln der Leistungsfähigkeit ein Einteilen in Leistungsklassen vorsieht, wobei das Einteilen in Leistungsklassen auf einem Abgleich mit Referenzwerten beruht.
